# EUROPÄISCHE PATENTSCHRIFT

(11) **EP 3 771 079 B1**
(45) Veröffentlichungstag und Bekanntmachung des Hinweises auf die Patenterteilung: **03.09.2025**
(21) Anmeldenummer: 20186908.8
(22) Anmeldetag: 21.07.2020
(51) Int. Cl.: H02K 15/06, H02K 15/04

(54) **KRANZANORDNUNGSVORRICHTUNG UND KRANZANORDNUNGSVERFAHREN**
RING ASSEMBLY DEVICE AND RING ASSEMBLY METHOD
DISPOSITIF D'AGENCEMENT DE COURONNE ET PROCÉDÉ D'AGENCEMENT DE COURONNE

(30) Priorität: 26.07.2019 DE 102019120262
(43) Veröffentlichungstag der Anmeldung: 27.01.2021
(73) Patentinhaber: Grob-Werke GmbH & Co. KG, 87719 Mindelheim (DE)
(72) Erfinder: Dreher, Clemens, 87719 Mindelheim (DE)
(74) Vertreter: KASTEL Patentanwälte PartG mbB

(56) Entgegenhaltungen:
- WO-A1-2013/153594
- WO-A1-2019/026377
- US-A1- 2019 356 188

## Beschreibung

Die Erfindung betrifft eine Kranzanordnungsvorrichtung und ein Kranzanordnungsverfahren, zum Bilden einer Kranzanordnung aus mehreren konzentrisch angeordneten Kränzen von vorzugsweise U-förmigen elektrischen Leitern, um eine Spulenwicklung eines Bauteils einer elektrischen Maschine zu bilden.

Die Erfindung liegt auf dem Gebiet der Herstellung von Bauteilen von elektrischen Maschinen, wie insbesondere Motoren und Generatoren, und mehr insbesondere auf dem Gebiet der Herstellung von Spulenwicklungen für ein solches Bauteil, wie z.B. einen Stator. Es ist bekannt, derartige Spulenwicklungen aus einzelnen Leitern, z.B. I-Pins oder Hairpins, zu bilden, die in Nuten eines Gehäuses des Bauteils eingefügt werden, wobei die Leiterenden umgeformt und anschließend zu Spulenwicklungen verbunden werden. Zum Einfügen der Leiter ist es aus
WO 2018/233771 A1,
WO 2018/233774 A1 und
WO 2018/233769 A1
WO 2013/153564A1
bekannt, die Leiter zunächst zu einem Kranz anzuordnen und dann den Kranz in das Gehäuse einzufügen.

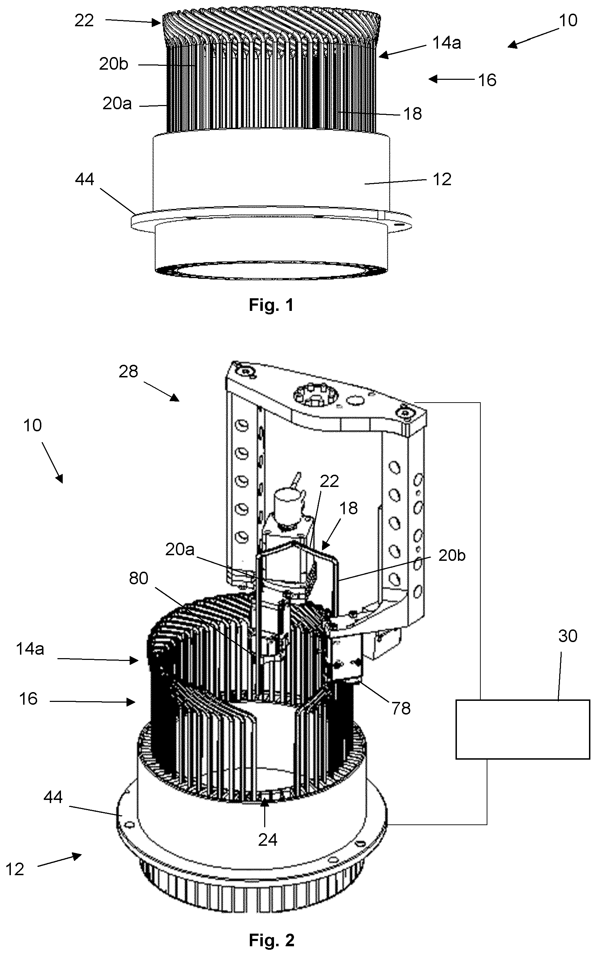

Gemäß [1] bis [4] werden die einzelnen Pins einzeln gegriffen und dann in ein Vorstecknest zu einem Kranz vorgesteckt. Dafür wird bei [1] bis [3] für jeden Kranz eines Stators ein kranzspezifisches Nest vorgesehen. Ein beispielhaftes Vorstecknest ist in [3], Fig. 1 dargestellt und besteht aus Nuten, deren Abmessungen größer dimensioniert sind als der jeweilige Kranz im Stator an Platzbedarf einnimmt. Nachdem jeder Kranz in ein eigens dafür vorgesehenes Vorstecknest vorgesteckt wurde, werden die Kränze nacheinander mit einer in [1] näher beschriebenen und gezeigten Fügeeinrichtung aus dem jeweiligen Vorstecknest ausgehoben und in einer Sammelaufnahme in Form eines Sammelnests vereint. Wenn z.B. eine Kranzanordnung aus einem ersten bis dritten Kranz zu bilden ist, kann mit dem Außenkranz begonnen werden, dann erfolgt ein Überführen des Mittelkranzes, dann des Innenkranzes. Das aus [1] und [2] bekannte Sammelnest ähnelt dem Vorstecknest - siehe [1] -, nur dass dessen Außen- bzw. Innendurchmesser so ausgelegt sind, dass alle Kränze darin Platz finden und nicht nur ein spezifischer (wie das beim Vorstecknest der Fall ist) - es ist also so dimensioniert, dass die Nuten des Sammelnestes in tangentialer als auch radialer Richtung größer sind, als alle Kränze gemeinsam an Platz im Stator benötigen. Wenn nacheinander Außen-, Mittel- und Innenkranz mit der Fügeeinrichtung im Sammelnest vereint sind, werden alle Kränze gemeinsam mit der Fügeeinrichtung aus dem Sammelnest ausgehoben und anschließen mit der Fügeeinrichtung in den Stator gefügt.

Bei der Literaturstelle [4] wird ein Vorstecknest mit beweglichen Stegen eingesetzt, auf dem die Kränze gebildet werden und von dem aus nacheinander die Kränze auf eine Kranzpositionierungseinrichtung mit nach außen schräg gerichteten Neigungsarmen überführt werden und dann in ein Sammelnest überführt werden, das eine Ringanordnung von nach außen offenen Nuten aufweist, die durch radiale Platten begrenzt werden, die an der Oberseite eine nach innen gerichtete Schräge aufweisen. Die Arme der Kranzpositioniereinrichtung sind axial und radial beweglich und können zur Übergabe zwischen die Platten gefahren werden. Beim Hängen auf den Armen der Kranzpositioniereinrichtung und beim Hängen auf den Platten haben die Leiter unterschiedliche axiale Positionen. Weiter ist an dem Sammelnest ein axial beweglicher Ringfuß vorgesehen, auf dem Enden der Leiter aufstützen, so dass die Kränze relativ zueinander im Sammelnest in der Höhe positioniert werden.

### Bei der Literaturstelle

[5] WO 2019/026377 A1
werden Kränze auf einer rotierenden Trommel mit radial beweglichen Stegen gebildet, zwischen denen Aufnahmenuten für die Leiter gebildet sind. Auf dieser Trommel wird insgesamt eine Kranzanordnung gebildet, die dann unter radialem Zurückziehen der Stege und geführt durch eine Führungseinrichtung zur Positionierung in einen Statorkern überführt wird.

Demnach wird im Stand der Technik nach der Literaturstelle [1] und [2] und [4] ein Kranzanordnungs- und -fügeverfahren mit folgenden Schritten durchgeführt:
1.1. Vorstecken der einzelnen Pins zu Außenkranz in einem (Außenkranz-)Vorstecknest;
1.2. Ausheben des Außenkranzes aus dem (Außenkranz-)Vorstecknest mit Fügeeinrichtung;
1.3. Fügen des Außenkranzes in das Sammelnest mit Fügeeinrichtung;
2. Analoges Vorgehen mit Mittelkranz;
3. Analoges Vorgehen mit Innenkranz.
   Alle Kränze befinden sich dann in Sammelnest.
4. Ausheben aller Kränze aus Sammelnest mit Fügeeinrichtung;
5. Fügen aller Kränze in den Stator mit Fügeeinrichtung.

Die aus [1] bis [3] bekannten Verfahren und Vorrichtungen haben sich bewährt; es lassen sich Spulenwicklungen mit hoher Qualität effektiv herstellen.

Die Erfindung hat sich zur Aufgabe gestellt, die aus [1] bis [3] bekannten Vorrichtungen und Verfahren hinsichtlich geringeren apparativen und prozesstechnischen Aufwands zu verbessern.

Zum Lösen dieser Aufgabe schafft die Erfindung eine
Kranzanordnungsvorrichtung und ein Kranzanordnungsverfahren gemäß den unabhängigen Ansprüchen.

Vorteilhafte Ausgestaltungen sind Gegenstand der Unteransprüche.

Die Erfindung schafft gemäß einem Aspekt eine Kranzanordnungsvorrichtung zum Bilden einer Kranzanordnung aus mehreren konzentrisch angeordneten Kränzen von vorzugsweise U-förmigen elektrischen Leitern, um eine Spulenwicklung eines Bauteils einer elektrischen Maschine zu bilden, umfassend
eine Sammelaufnahme mit mehreren um eine Achse ringförmig angeordneten und durch radiale Stege begrenzten Nuten und
eine Kranzpositioniereinrichtung zum relativen axialen Positionieren eines oder mehrerer der Kränze,
wobei die Kranzpositioniereinrichtung eine Stützeinrichtung zum Stützen der elektrischen Leiter eines zu steckenden Kranzes in einer axialen Steckposition, bei der die Leiter aus der Sammelaufnahme weiter vorstehen, und eine Halteeinrichtung zum Halten der Leiter eines fertig gesteckten Kranzes in einer Lagerposition, in der die Leiter des fertig gesteckten Kranzes weiter in die Sammelaufnahme eingefahren sind, aufweist und dazu ausgebildet ist, mit der Stützeinrichtung die Leiter eines zu steckenden zweiten Kranzes zu stützen, während die Halteeinrichtung die Leiter eines fertig gesteckten ersten Kranzes in der Lagerposition hält.

Mit der Vorrichtung und dem Verfahren gemäß Ausführungsbeispielen der Erfindung lassen sich insbesondere U-förmige elektrische Leiter (Hairpins) zu einem Kranz anordnen. Die Vorrichtung und Verfahren gemäß Ausführungsbeispielen der Erfindung sind alternativ auch für einschenklige Leiter ohne U-Umbiegung (I-Pins, d.h. einschenklige Pins) einsetzbar.

Es ist erfindungsgemäß vorgesehen, dass die Nuten der Sammelaufnahme jeweils eine sich in Umfangsrichtung erstreckende Nutbegrenzung an einer ersten radialen Seite aufweisen und an einer zweiten radialen Seite jeweils eine Öffnung aufweisen.

Es ist erfindungsgemäß weiter vorgesehen, dass die Kranzpositioniereinrichtung in die Öffnung eingreifende radial oder radial und axial bewegliche Kranzpositionier-Schieber aufweist, an der sowohl die Stützeinrichtung als auch die Halteeinrichtung ausgebildet sind.

Es ist bevorzugt, dass die Nutbegrenzung an den Stegen und/oder an einem Ringbereich der Sammelaufnahme ausgebildet ist.

Es ist bevorzugt, dass die Stützeinrichtung an einer sich quer zu der Achse erstreckenden Stirnfläche der einzelnen Kranzpositionier-Schieber ausgebildete Anschläge für die Leiter aufweist.

Es ist erfindungsgemäß weiter vorgesehen, dass die Halteeinrichtung eine gegen die Nutbegrenzung verfahrbare Mantelfläche an den einzelnen Kranzpositionier-Schiebern aufweist, so dass die Leiter zwischen der Mantelfläche und der Nutbegrenzung positioniert werden können.

Vorzugsweise sind die Kranzpositionier-Schieber so bewegbar, dass die Leiter zwischen der Mantelfläche und der Nutbegrenzung geklemmt werden können. Es muss aber nicht zwangsläufig ein Klemmen erfolgen; ein Positionieren mit geringeren, d. h. nicht klemmenden Kräften (d. h. kein Kraftschluss) oder auch mit geringem Spiel wäre grundsätzlich ebenso möglich.

Bei einer derzeit bevorzugten Ausgestaltung ist vorgesehen, dass die Öffnungen der Nuten an einer inneren radialen Seite ausgebildet sind und dass eine Kranzpositionier-Schieber-Bewegungseinrichtung zum radialen und/oder axialen Bewegen der Kranzpositionier-Schieber radial innerhalb der Sammelaufnahme anordenbar ist. Die ganze Anordnung kann auch gespiegelt sein, d. h. die Öffnungen der Nuten sind dann an einer äußeren radialen Seite ausgebildet und die Kranzpositionier-Schieber-Bewegungseinrichtung ist radial außerhalb der Sammelaufnahme anordenbar. Z.B. wären dann im Inneren Nuten angeordnet, und Schieber außen drücken die Drähte in die innen angeordneten Nuten.

Es ist bevorzugt, dass die Lagerposition eine Anschlagposition ist, an der die vorzugsweise U-förmigen Leiter mit ihrem U-förmigen Ende an der Sammelaufnahme anschlagen und dadurch positionierbar sind. Das gleiche funktioniert auch mit I-Pins, wenn diese einen Knick aufweisen.

Eine bevorzugte Kranzanordnungsvorrichtung weist eine Greifeinrichtung zum Greifen und Stecken der Leiter zu einem Kranz und eine Steuerung zum Steuern der Kranzpositioniereinrichtung und der Greifeinrichtung auf.

Es ist bevorzugt, dass die Steuerung dazu ausgebildet ist, die Greifeinrichtung und die Kranzpositioniereinrichtung anzusteuern zum:
Stecken elektrischer Leiter in die Nuten der Sammelaufnahme an der axialen Steckposition, an der die Leiter weiter aus der Sammelaufnahme axial vorstehen, um einen ersten Kranz zu bilden,
axialen Verlagern des ersten Kranzes aus der axialen Steckposition weiter in die Sammelaufnahme hinein in die Lagerposition,
Stecken elektrischer Leiter in die Nuten der Sammelaufnahme an der axialen Steckposition, um einen zweiten Kranz zu bilden, während der erste Kranz an der Lagerposition gehalten wird, und
axialen Verlagern des zweiten Kranzes in die Lagerposition.

Gemäß einem weiteren Aspekt schafft die Erfindung ein
Kranzanordnungsverfahren zum Bilden einer Kranzanordnung aus mehreren konzentrisch angeordneten Kränzen von vorzugsweise U-förmigen elektrischen Leitern, um eine Spulenwicklung eines Bauteils einer elektrischen Maschine zu bilden, umfassend
a) einzelnes Stecken einzelner elektrischer Leiter in um eine Achse ringförmig angeordnete und durch radiale Stege begrenzte Nuten einer Sammelaufnahme an einer axialen Steckposition, an der die Leiter weiter aus der Sammelaufnahme axial vorstehen, um einen ersten Kranz zu bilden,
b) axiales Verlagern des ersten Kranzes aus der axialen Steckposition weiter in die Sammelaufnahme hinein in eine Lagerposition,
c) einzelnes Stecken einzelner elektrischer Leiter in die Nuten der Sammelaufnahme an der axialen Steckposition, um einen zweiten Kranz zu bilden, während der erste Kranz an der Lagerposition gehalten wird, und
d) axiales Verlagern des zweiten Kranzes in die Lagerposition.

Eine bevorzugte Ausgestaltung des Kranzanordnungsverfahren umfasst die Schritte:
e) einzelnes Stecken einzelner elektrischer Leiter in die Nuten der Sammelaufnahme an der Steckposition, um einen dritten Kranz zu bilden, während der erste und der zweite Kranz an der Lagerposition gehalten wird, und
f) axiales Verlagern des dritten Kranzes in die Lagerposition.

Es ist bevorzugt, dass als erster Kranz ein äußerer Kranz gesteckt wird und der zweite Kranz weiter radial innen als der erste Kranz gesteckt wird.

Es ist bevorzugt, dass als zweiter Kranz ein mittlerer Kranz gesteckt wird.

Es ist bevorzugt, dass als dritter Kranz ein innerer Kranz gesteckt wird.

Es ist bevorzugt, dass die Leiter beim Stecken durch bewegliche Anschläge abgestützt werden, so dass sie beim Stecken an der Steckposition verbleiben.

Es ist bevorzugt, dass das axiale Verlagern durch Fallenlassen erfolgt.

Es ist bevorzugt, dass das Halten wenigstens eines bereits vorher gesteckten Kranzes an der Lagerposition durch Klemmen der Leiter zwischen einem Kranzanordnungs-Schieber und einem Ringbereich der Sammelaufnahme erfolgt.

Es ist bevorzugt, dass das axiale Verlagern mittels Schwerkraft durch Wegbewegen einer Stützeinrichtung erfolgt.

Es ist bevorzugt, dass das axiale Verlagern durch eine Relativbewegung zwischen der Sammelaufnahme und einer Kranzpositioniereinrichtung erfolgt.

Es ist bevorzugt, dass das axiale Verlagern durch eine Relativbewegung zwischen einem oberen Teil und einem unteren Teil der Sammelaufnahme oder zwischen einem oberen Teil der Sammelaufnahme und einer Kranzpositioniereinrichtung erfolgt.

Demnach ist bevorzugt, dass das axiale Verlagern der Kränze mittels Schwerkraft erfolgt. Dies kann einerseits dadurch erfolgen, dass bewegliche Anschläge z.B. nach innen eingeschoben werden, und die Kränze dann durch die Schwerkraft fallen, oder alternativ, dass eine Relativbewegung zwischen der Sammelaufnahme und der Kranzpositioniereinrichtung erfolgt - vorzugsweise aktuatorisch angetrieben - und die Kränze dieser Bewegung dann ebenfalls bedingt durch die Schwerkraft folgen. Eine Bewegung der Kränze kann auch durch ein separates relativ zu einem Unterteil der Sammelaufnahme und/oder der Kranzpositioniereinrichtung bewegliches Oberteil der Sammelaufnahme erfolgen, auf dem die Kränze beim Überführen von der Steckposition in die Lagerposition aufliegen.

Es ist bevorzugt, dass das axiale Verlagern des jeweiligen Kranzes aus der Steckposition in eine tiefere Anschlagsposition als Lagerposition erfolgt, in der die U-förmigen Enden der Leiter auf Stegen der Sammelaufnahme, welche die Nuten in Umfangsrichtung begrenzen, aufliegen. Bei I-Pins mit Knick funktioniert ein solches Vorgehen auch.

Es ist bevorzugt, dass das Kranzanordnungsverfahren mit einer Kranzanordnungsvorrichtung nach einer der voranstehenden Ausgestaltungen durchgeführt wird.

Vorzugsweise umfasst das Kranzanordnungsverfahren den Schritt:
Anheben der aus wenigstens dem ersten und dem zweiten Kranz gebildeten Kranzanordnung aus der Lagerposition in eine angehobene Position zur Übergabe an eine gesonderte Fügevorrichtung zum Einfügen der Kranzanordnung in das Bauteil.

Gemäß einem weiteren Aspekt schafft die Erfindung ein Computerprogrammprodukt, umfassend Steueranweisungen, die, wenn in eine Steuerung einer Kranzanordnungsvorrichtung nach einer der voranstehenden Ausgestaltungen geladen, die Kranzanordnungsvorrichtung veranlassen, das Kranzanordnungsverfahren nach einer der voranstehenden Ausgestaltungen durchzuführen.

Besonders bevorzugte Ausgestaltungen der Erfindung schaffen eine Vorrichtung zum Vorstecken aller Kränze. Alle Kränze, die zu einer Kranzanordnung zu stecken sind, können in einer einzelnen Vorrichtung vorgesteckt werden.

Das Vorstecken erfolgt vorzugsweise mit einem einer Greifvorrichtung in Form eines Hairpin-Greifers, wie er im Einzelnen in der deutschen Patentanmeldung DE 10 2019 114 221.0 beschrieben und gezeigt ist.

Ein Vorteil bevorzugter Ausgestaltungen der Erfindung ist, dass die Vorstecknester entfallen und alle Kränze (z.B. Außen-, Mittel- und Innenkranz) in einer Vorrichtung vorgesteckt werden können.

Eine bevorzugte Ausgestaltung eines Kranzanordnungs- und -fügeverfahrens weist insbesondere folgenden Ablauf auf:
1. Vorstecken der einzelnen Pins, vorzugsweise mit Hairpin-Greifer zu mehreren Kränzen, wie z.B. Außen-, Mittel- und Innenkranz in die Kranzanordnungsvorrichtung gemäß einer der voranstehenden Ausgestaltungen,
2. Ausheben aller Kränze aus Vorrichtung mit einer Fügeeinrichtung, beispielsweise der aus [1] oder [2] bekannten Fügeeinrichtung
3. Fügen aller Kränze in den Stator mit der Fügeeinrichtung

Einige Vorteile bevorzugter Ausführungsformen der Erfindung sind:
- Erhebliche Taktzeit-Vorteile
- Deutlich "schlankerer Ablauf"
- Vorstecknester entfallen
- Gesamtes Handling der Vorstecknester (Zuführung - Abführung zur Fügeeinheit) entfällt
- Kompakterer Anlagenaufbau möglich

Im Folgenden werden einige besondere Vorteile und Merkmale bevorzugter Ausgestaltungen der Erfindung näher erläutert:
Beim Vorstecken ist es sehr wünschenswert, dass der Kranz bzw. bereits vorgesteckte Pins des Kranzes aus dem Nest herausstehen. Dies liegt daran, dass sich bereits im Nest befindliche Hairpins (also bereits vorgesteckte Pins) durch die Vorsteckbewegung des aktuell im Vorsteckprozess befindlichen Pins (Pin der sich aktuell im Hairpin-Greifer befindet) leicht wegbewegen können sollen, um ein Vorstecken zu ermöglichen oder zu erleichtern. Die gewünschte "Bewegungsfreiheit" erhalten die bereits vorgesteckten Pins insbesondere, wenn sie in einer definierten Höhe aus dem Nest herausstehen. Beim Vorstecken eines Kranzes stehen daher vorzugsweise bereits im Nest befindliche Leiter, wie insbesondere Hairpins, aus der Aufnahme heraus.

Dadurch, dass nun alle Kränze in eine Kranzanordnungsvorrichtung vorgesteckt werden sollen - ohne mehrere spezifische Vorstecknester zu verwenden, ist eine Idee bevorzugter Ausgestaltungen der Erfindung, einen vollständig vorgesteckten ersten Kranz (z.B. begonnen mit Außenkranz) in die Kranzanordnungsvorrichtung aufzunehmen - also von der für das Vorstecken vorgesehenen erhöhten Position in eine tiefere Position zu überführen, um dann den daraufhin vorzusteckenden zweiten Kranz, z.B. Mittelkranz, bzw. dessen Leiter (z.B. Hairpins) wieder auf eine erhöhte Position in der Kranzanordnungsvorrichtung vorstecken zu können. Beim Vorstecken des Mittelkranzes befindet sich zum Beispiel der bereits vorgesteckte Außenkranz in einer tieferen Position und der aktuell im Vorsteckprozess befindliche Mittelkranz in erhöhter Position.

Nachdem alle Kränze (z.B. Außen-, Mittel-, Innenkranz) in die Kranzanordnungsvorrichtung vorgesteckt worden sind, ist es vorteilhaft, alle Kränze wieder in die erhöhte Position auszuheben, da sie in dieser Position einfach von der Fügeeinrichtung aus der Kranzanordnungsvorrichtung ausgehoben werden können, um sie dann in den Stator zu fügen - siehe für weitere Einzelheiten zum Fügen die vorerwähnten Literaturstellen [1] und/oder [2].

Im Folgenden wird ein bevorzugter Aufbau der Kranzanordnungsvorrichtung beschrieben:
Die Kranzanordnungsvorrichtung weist vorzugweise eine innere Zustelleinheit - Beispiel für die Kranzpositioniereinrichtung - auf, die von einem Sammelnest - Beispiel für die Sammelaufnahme - umschlossen wird.

Die innere Zustelleinheit besitzt vorzugsweise radial bewegliche Schieber, die durch eine Mechanik im Zentrum betätigt werden (die Funktion der Kinematik kann auf unterschiedliche Weisen erfolgen). Die innere Zustelleinheit ist vorzugsweise axial, insbesondere vertikal, beweglich.

Dadurch können alle Kränze/das Gesamtpaket - Kranzanordnung - nach dem Vorstecken wieder aus der Kranzanordnungsvorrichtung ausgehoben werden, um sie mit der Fügeeinrichtung (vgl. [1]) auszuheben.

Dadurch können die Einzel-Kränze kontrolliert in die Vorrichtung aufgenommen werden.

Das Sammelnest besitzt vorzugsweise Nuten, ähnlich wie die des Stators, nur dass deren Abmessungen (Außendurchmesser größer, Innendurchmesser kleiner, tangentiale Nutbreite beidseitig größer) deutlich größer dimensioniert sind - dadurch wird ein Vorstecken der Pins erleichtert, weil das Positionieren der Pins bspw. mittels eines Roboters aus Aspekten der Genauigkeit ermöglicht wird. Das Sammelnest weist vorzugsweise eine ringförmige Außenkontur und radial zur Mitte zulaufende Stege, jedoch dann keine ringförmige Innenkontur auf. Die Stege bilden Nuten (die zur Mitte hin offen sind) in welche die Schieber der inneren Zustelleinheit derart einfahren können, dass sie die Nuten - von oben gesehen - verschließen und dadurch für die Pinenden der zu steckenden Pins eine Art "Zwischenboden" darstellen auf den der Pin mit seinen beiden Schenkelenden abgestellt wird. Bei einer anderen Ausgestaltung ist die Anordnung der Zustelleinheit und des Sammelnest gespiegelt - das Sammelnest ist innen und die Zustelleinheit außen.

Ausführungsbeispiele der Erfindung werden im Folgenden anhand der beigefügten Zeichnungen näher erläutert. Darin zeigt:
- Fig. 1: eine perspektivische Darstellung einer Ausgestaltung einer Kranzanordnungsvorrichtung mit einem vorgesteckten ersten Kranz aus elektrischen Leitern in einer Steckposition;
- Fig. 2: eine schematische perspektivische Darstellung der Kranzanordnungsvorrichtung bei einem Steckvorgang des ersten Kranzes;
- Fig. 3: eine perspektivische Darstellung der Kranzanordnungsvorrichtung, wobei der erste Kranz in einer Lagerposition liegt und ein zweiter Kranz in der Steckposition ist;
- Fig. 4: eine schematische Darstellung einer Kranzpositioniereinrichtung der Kranzanordnungsvorrichtung, die innerhalb einer Sammelaufnahme der Kranzanordnungsvorrichtung angeordnet ist;
- Fig. 5: eine Draufsicht auf die Kranzanordnungsvorrichtung mit der Sammelaufnahme und der Kranzpositioniereinrichtung;
- Fig. 6: eine Ansicht vergleichbar der Fig. 4, wobei die Kranzpositioniereinrichtung in einer anderen Stellung ist;
- Fig. 7: eine Ansicht vergleichbar der Fig. 5, wobei die Kranzpositioniereinrichtung in der Stellung gemäß Fig. 6 ist;
- Fig. 8: einen Schnitt durch die Kranzpositioniereinrichtung;
- Fig. 9: eine perspektivische Darstellung der Sammelaufnahme;
- Fig. 10: eine axiale Draufsicht auf die Sammelaufnahme;
- Fig. 11: eine Draufsicht auf einen Schieber der Kranzpositioniereinrichtung;
- Fig. 12: eine perspektivische Darstellung des Schiebers der Kranzpositioniereinrichtung
- Fig. 13: eine Draufsicht auf die Kranzanordnungsvorrichtung mit ausgefahrenen Schiebern;
- Fig. 14: eine teilweise geschnittene Darstellung der Kranzanordnungsvorrichtung mit vorgestecktem ersten Kranz in der Steckposition;
- Fig. 15: eine perspektivische Ansicht der Kranzanordnungsvorrichtung mit erstem Kranz in der Steckposition, wobei ein Außenmantel der Sammelaufnahme zu Darstellungszwecken weggelassen worden ist;
- Fig. 16: einen Schnitt durch die Kranzanordnungsvorrichtung, wobei der erste Kranz in eine Lagerposition überführt worden ist;
- Fig. 17: das obere Ende der Kranzanordnungsvorrichtung in der Stellung von Fig. 16;
- Fig. 18: eine perspektivische Darstellung der Kranzanordnungsvorrichtung in der Stellung von Fig. 16;
- Fig. 19: einen Schnitt durch die Kranzanordnungsvorrichtung bei einer Bewegung der Kranzpositioniereinrichtung in eine Position zum Stecken des zweiten Kranzes;
- Fig. 20: eine weitere Zwischenstellung der Kranzpositioniereinrichtung vor dem Stecken des zweiten Kranzes;
- Fig. 21: einen Schnitt durch die Kranzanordnungsvorrichtung in einer Position, in der der zweite Kranz wie in Fig. 3 gezeigt, gesteckt werden kann;
- Fig. 22: einen Schnitt durch die Kranzanordnungsvorrichtung beim Stecken des zweiten Kranzes (erster Kranz zur Übersichtlichkeit weggelassen);
- Fig. 23: einen Schnitt durch die Kranzanordnungsvorrichtung, nachdem der zweite Kranz in eine Lagerposition überführt worden ist (erster Kranz zu Übersichtszwecken weggelassen);
- Fig. 24: einen Schnitt durch die Kranzanordnungsvorrichtung in einer Position, in der ein dritter Kranz gesteckt werden kann;
- Fig. 25: eine Schnittansicht durch die Kranzanordnungsvorrichtung, wobei ein erster bis dritter Kranz sich in einer Lagerposition befinden;
- Fig. 26: eine Schnittansicht durch die Kranzanordnungsvorrichtung bei einem Zwischenschritt vor dem Ausheben der Kranzanordnung und
- Fig. 27: einen Schnitt durch die Kranzanordnungsvorrichtung bei einem weiteren Zwischenschritt kurz vor dem Ausheben der Kranzanordnung, und
- Fig. 28: einen Schnitt durch die Kranzanordnungsvorrichtung in einer Stellung zum Ausheben der Kranzanordnung.

Die im Folgenden näher beschriebenen Ausführungsbeispiele werden anhand einer Herstellung eines Stators mit drei Kränzen von Hairpins (Außen-, Mittel- und Innenkranz) als Leiter beschrieben. Bei anderen hier nicht näher ausgeführten Ausgestaltungen sind auch weniger oder mehr Kränze vorgesehen. Auch können als Leiter anstelle von Hairpins I-Pins verwendet werden.

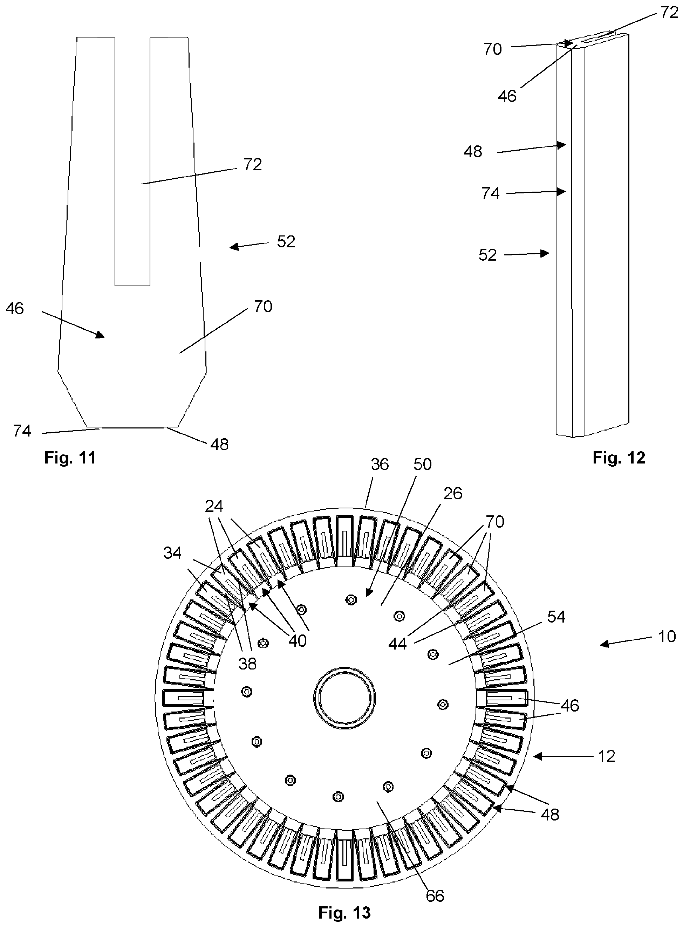

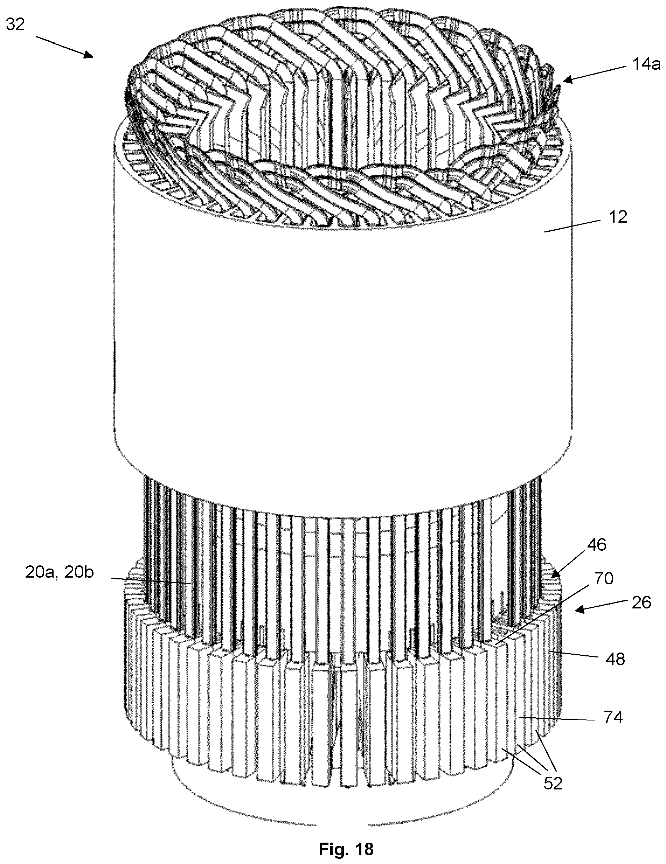

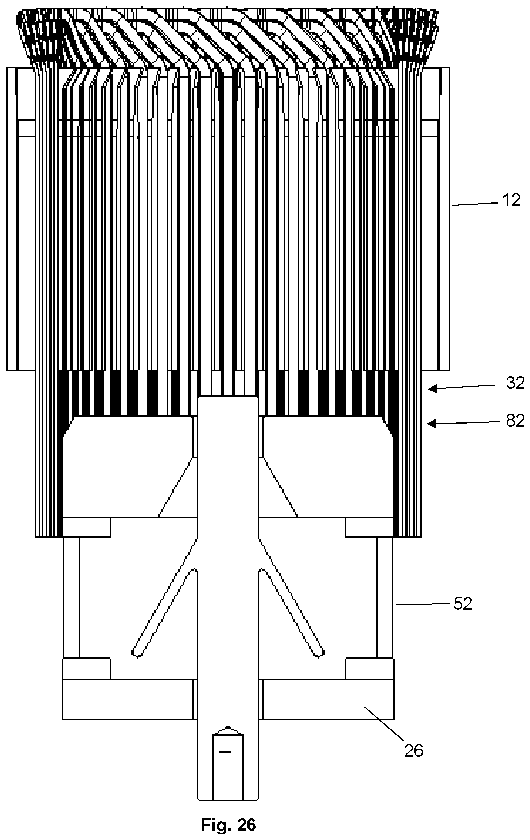

Im Folgenden wird anhand der Figuren 1 bis 12 zunächst eine erste Ausführungsform einer Kranzanordnungsvorrichtung 10 zum Bilden einer Kranzanordnung aus mehreren konzentrisch angeordneten Kränzen von elektrischen Leitern dargestellt. Anschließend wird anhand der Darstellung in den Figuren 13 bis 28 eine Ausführungsform eines mit der Kranzanordnungsvorrichtung 10 durchführbaren Kranzanordnungsverfahrens zum Bilden einer Kranzanordnung aus den mehreren konzentrisch angeordneten Kränzen elektrischer Leiter erläutert.

Fig. 1 zeigt eine perspektivische Darstellung einer Sammelaufnahme 12 der Kranzanordnungsvorrichtung 10 mit einem vorgesteckten ersten Kranz 14a in einer axialen Steckposition 16, in der der erste Kranz 14a weiter aus der Sammelaufnahme 12 hervorsteht.

Der erste Kranz 14a ist aus mehreren U-förmigen Leitern, im Folgenden Hairpins 18 genannt, gebildet. Jeder Hairpin 18 weist einen ersten Schenkel 20a, einen zweiten Schenkel 20b und eine Dachbiegung 22 zwischen den Schenkeln 20a, 20b auf. Die Schenkel 20a, 20b werden beim Stecken in Nuten 24 der Sammelaufnahme 12 eingesteckt. Der Vorgang des Steckens ist in Fig. 2 dargestellt. Gemäß Fig. 2 weist die Kranzanordnungsvorrichtung 10 zusätzlich zu der Sammelaufnahme 12 eine Kranzpositioniereinrichtung 26, eine Greifeinrichtung 28 und eine Steuerung 30 auf.

Mit der Greifeinrichtung 28 kann der erste Kranz 14a in der Sammelaufnahme 12 gesteckt werden.

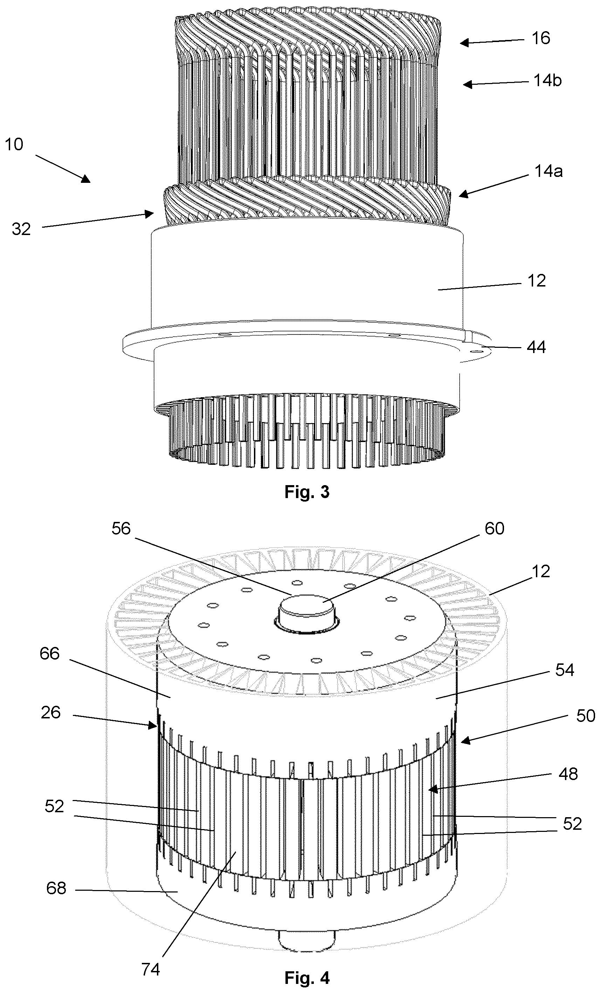

Wie Fig. 3 zeigt, ist die Kranzanordnungsvorrichtung 10 derart ausgebildet, dass sie den ersten Kranz 14a aus der axialen Steckposition 16, in der die Hairpins 18 des ersten Kranzes 14a weiter aus der Sammelaufnahme 12 nach oben vorstehen - angehobene Steckposition - in eine Lagerposition 32 überführt, in der die Hairpins des ersten Kranzes 14a weiter in die Sammelaufnahme 12 eingefahren sind, um dann einen zweiten Kranz 14b in der axialen Steckposition 16 in der gleichen Sammelaufnahme 12 vorzustecken. Die angehobene axiale Steckposition 16, in der die Hairpins 18 des jeweils zu steckenden Kranzes 14a, 14b weiter vorstehen, ist vorteilhaft, um genügend Bewegungsfreiraum für die Greifeinrichtung 28 zum exakten Stecken der Hairpins 18 in die Nuten 24 der Sammelaufnahme 12 zu schaffen.

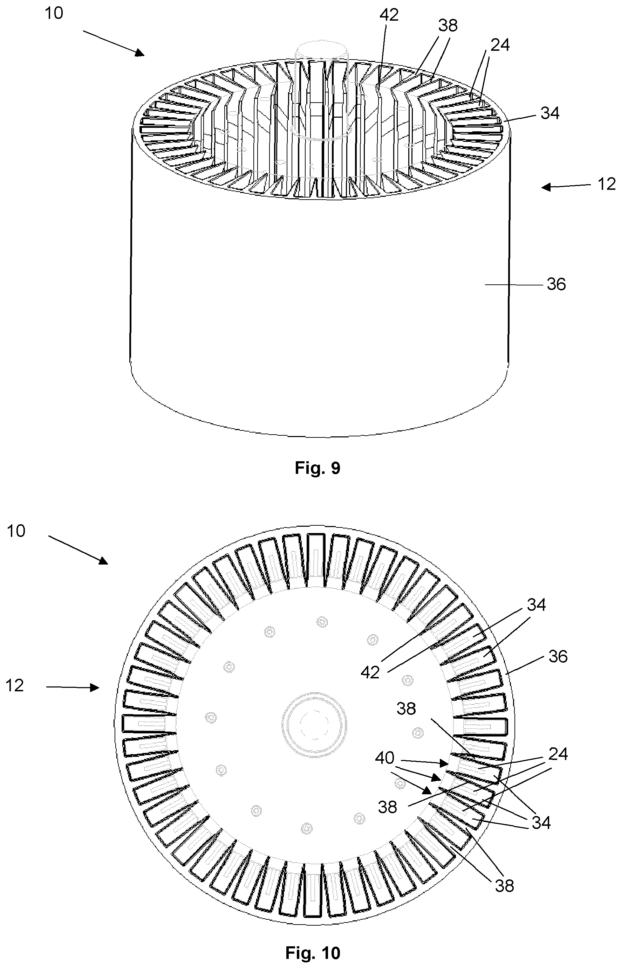

Die Kranzpositioniereinrichtung 26 dient zum Positionieren der jeweiligen Kränze 14a, 14b und ist im Einzelnen in den Fig. 4 bis 8 dargestellt. Fig. 9 und 10 zeigen die Sammelaufnahme 12, und die Fig. 11 und 12 zeigen einen Schieber der Kranzpositioniereinrichtung 26.

Wie am besten aus den Fig. 9 und 10 ersichtlich, weist die Sammelaufnahme 12 die mehreren um die Mittelachse herum ringförmig angeordneten Nuten 24 auf. Zum Bilden der Nuten 24 weist die Sammelaufnahme 12 eine sich in Umfangsrichtung erstreckende Nutbegrenzung 34 in Form eines Ringmantels 36 auf. Von dem Ringmantel 36 aus stehen in eine radiale Richtung, hier nach innen, radiale Stege 38 vor, welche die Nuten 24 in Umfangsrichtung begrenzen. So weist jede Nut 24 an einer radialen Seite die Nutbegrenzung 34 und an der anderen radialen Seite, hier an der inneren Seite, eine Öffnung 40 auf. In axialer Draufsicht sind die Nuten 24 somit, wie aus Fig. 10 ersichtlich, etwa U-förmig begrenzt. In dem dargestellten Ausführungsbeispiel sind die Nuten 24 in Draufsicht etwa rechtwinklig ausgebildet.

Die Nuten 24 sind in radialer Richtung sowie in Umfangsrichtung so dimensioniert, dass ihre Anzahl der Anzahl von Gehäusenuten in einem - hier nicht gezeigten - Statorgehäuse, in welche die Kranzanordnung später einzuführen ist, entsprechen. Allerdings sind die Nuten 24 der Sammelaufnahme 12 in radialer Richtung sowie in tangentialer Richtung - Umfangsrichtung - größer dimensioniert als die Gehäusenuten in dem Stator. Die Dimensionierung der Nuten 24 ist so, dass die Schenkel 20a, 20b der Hairpins 18 darin mit Spiel aufgenommen sind. Die Hairpins 18 sind vorzugsweise aus einem Rechteckdraht geformt.

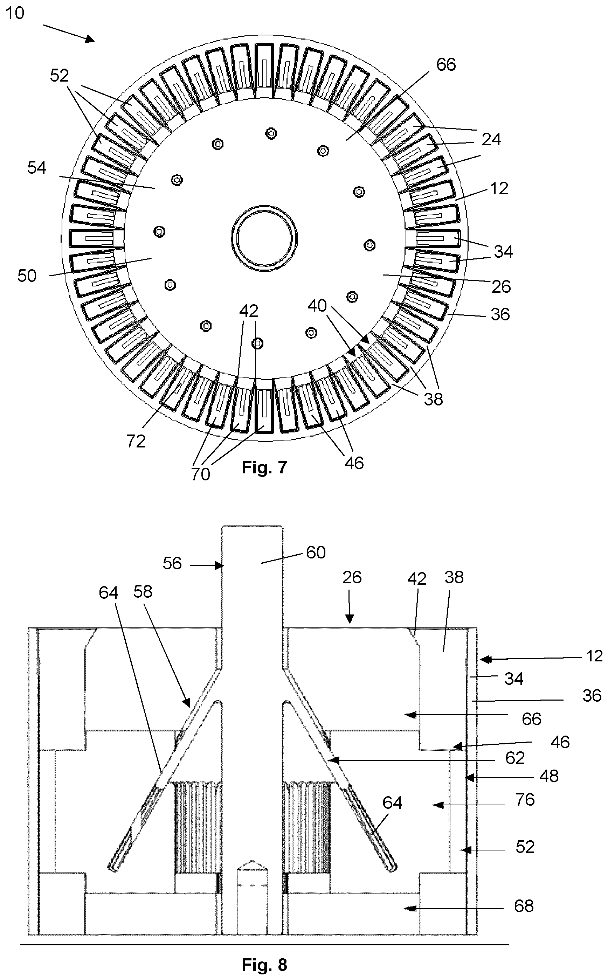

Wie aus den Fig. 8 und 9 ersichtlich, kann an einem axialen Ende der Sammelaufnahme 12, hier insbesondere an dem im bestimmungsgemäßen Gebrauch nach oben zu richtenden axialen Ende der Sammelaufnahme 12 an einigen oder allen radialen Stegen 38 ein radialer Vorsprung 42 ausgebildet sein. Damit kann sich die Sammelaufnahme 12 auf einem entsprechenden axialen Ende der Kranzpositioniereinrichtung 26 abstützen, wobei dieses radiale Ende der Kranzpositioniereinrichtung 26 komplementär zu den radialen Vorsprüngen 42 ausgebildet ist. Ansonsten kann wie in den Fig. 1 bis 3 gezeigt, auch ein Ringflansch 44 oder ein sonstiger Befestigungsbereich zum Befestigen der Sammelaufnahme 12 an einem hier nicht näher dargestellten Maschinengestell vorgesehen sein. Alternativ kann der Befestigungsbereich auch an einem axial bewegbaren Element befestigt sein.

Die Kranzpositioniereinrichtung 26 ist im Einzelnen in den Fig. 4 bis 8 dargestellt. Die Kranzpositioniereinrichtung 26 ist insbesondere axial relativ zu der Sammelaufnahme 12 beweglich. Beispielsweise ist die Kranzpositioniereinrichtung 26 an einem hier nicht näher dargestellten Axialaktor befestigt, mit der die Kranzpositioniereinrichtung 26 gesteuert über die Steuerung 30 entlang der in vertikaler Richtung ausgerichteten Mittelachse bewegbar ist. Bei einer anderen Ausgestaltung kann auch vorgesehen sein, dass die Sammelaufnahme 12 beweglich ist, währen die Kranzpositioniereinrichtung 26 stationär angeordnet ist.

Die Kranzpositioniereinrichtung 26 weist eine Stützeinrichtung 46 zum Stützen der elektrischen Leiter - Hairpins 18 - eines zu steckenden Kranzes 14a, 14b in der Steckposition 16 und eine Halteeinrichtung 48 zum Halten der Leiter - Hairpins 18 - eines fertig gesteckten Kranzes 14a in der Lagerposition auf.

Zum Bilden der Stützeinrichtung 46 und der Halteeinrichtung 48 weist die in dem hier dargestellten Ausführungsbeispiel als Zustelleinheit 50 ausgebildete Kranzpositioniereinrichtung 26 eine Reihe von Schiebern 52 auf, die durch die Öffnungen 40 in die Nuten 24 vorgeschoben und daraus wieder zurückgezogen werden können. Vorzugsweise ist je ein Schieber 52 pro Nut 24 vorgesehen. Die Schieber 52 sind vorzugsweise in radialer Richtung bewegbar.

Bei der hier dargestellten Ausführungsform ist die Sammelaufnahme 12 als Außenring ausgebildet, und die Kranzpositioniereinrichtung 26 ist innen innerhalb der Sammelaufnahme 12 angeordnet. Bei einer anderen - nicht dargestellten - Ausgestaltung ist die Anordnung umgekehrt, d. h. die Sammelaufnahme 12 ist mit nach radial außen reichenden radialen Stegen 38 innen angeordnet, und die Kranzpositioniereinrichtung 26 ist als Außenring um die Sammelaufnahme 12 geführt. In diesem Falle können dann die Schieber 52 radial nach innen in die Nuten 24 eingeschoben werden.

Zum Bewegen der Schieber 52 weist die Kranzpositioniereinrichtung 26 wie aus den Fig. 4 bis 8 ersichtlich einen Grundkörper 54, an dem die Schieber 52 radial beweglich geführt sind, sowie ein relativ zu dem Grundkörper 54 bewegbares Betätigungselement 56 auf, das gesteuert durch die Steuerung 30 relativ zu dem Grundkörper 54 beweglich ist. Ein Umsetzgetriebe 58 wandelt die Bewegung des Betätigungselements 56 in eine Radialbewegung der Schieber 52 um.

Der Aufbau von Grundkörper 54, Betätigungselement 56 und Umsetzgetriebe 58 kann unterschiedlich ausgebildet sein, solange eine Relativbewegung vom Betätigungselement 56 und Grundkörper 54 in eine Radialbewegung der Schieber 52 umsetzbar ist. Bei dem dargestellten Ausführungsbeispiel ist das Betätigungselement 56 eine Schubstange 60, die in dem Grundkörper 54, der durch zwei Ringplatten mit Radialführung dazwischen gebildet ist, in axialer Richtung beweglich ist. An der Schubstange 60 greift ein Kegelflansch 62 an, der in Schrägnuten 64 der Schieber 52 eingreift. Anstelle dessen könnte zum Beispiel auch eine Kurvenscheibe zum Umsetzen der Relativbewegung des Betätigungselements 56 in die Radialbewegung der Schieber 52 vorgesehen sein.

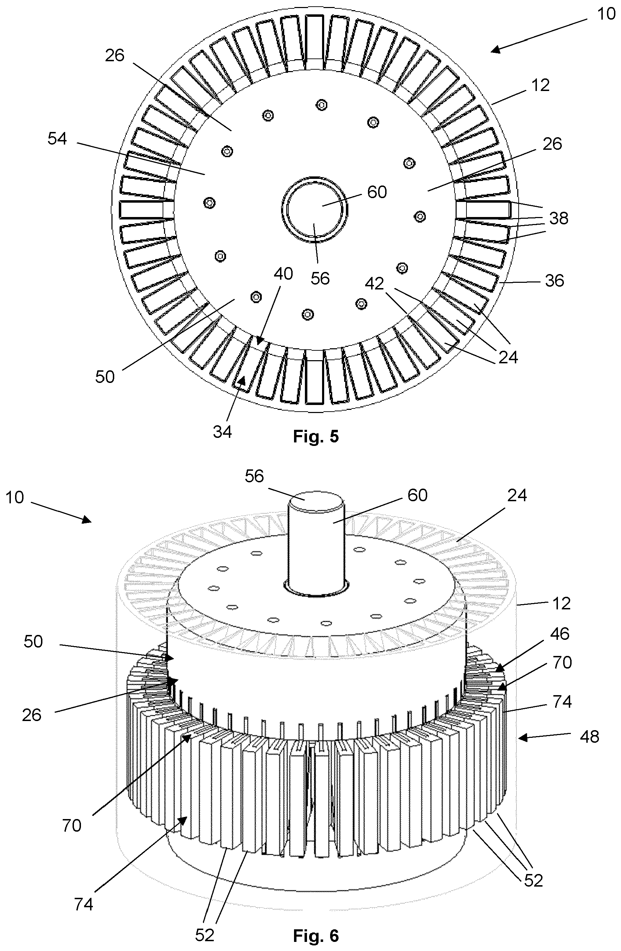

Die Fig. 4 und 5 zeigen einen Zustand der Kranzpositioniereinrichtung 26 mit nach innen eingefahrenen Schiebern 52. Die Fig. 6 und 7 zeigen einen Zustand der Kranzpositioniereinrichtung 26 mit nach außen ausgefahrenen Schiebern 52. In Fig. 8 sind das außen angeordnete Sammelnest als Beispiel für die Sammelaufnahme 12, eine obere Schieberführung 66 (zum Beispiel Teil des Grundkörpers 54), der Kegelflansch 62 als Antriebskegel für die Schieber 52, die Schieber 52 sowie die untere Schieberführung 68 (zum Beispiel Teil des Grundkörpers 54) dargestellt.

Die Sammelaufnahme 12 hat, wie aus Fig. 7 sowie den Fig. 9 und 10 ersichtlich eine ringförmige Außenkontur - Ringmantel 36 - mit radial zur Mitte zulaufenden Stegen 38. Bei der dargestellten Ausführungsform gibt es an der Sammelaufnahme 12 keine ringförmige Innenkontur, weil die Schieber 52 der Kranzpositioniereinrichtung 26 radial von innen nach außen in die Nut 24 zwischen den Stegen 38 einfahren können. Hierdurch lässt sich, wie durch Fig. 6 und 7 gezeigt, ein "Zwischenboden" bilden.

Ein einzelner Schieber 52 ist in Draufsicht in Fig. 11 und in perspektivischer Ansicht in Fig. 12 dargestellt. Der Schieber 52 weist eine nach oben gerichtete Stirnfläche 70, eine Schiebernut 72 zur Anbindung an die Mechanik und eine radial nach außen gerichtete Mantelfläche 74 auf.

Durch radiales Ausfahren der Schieber 52 bewegt sich die Mantelfläche 74 in Richtung auf die Nutbegrenzung 34 einer jeden Nut 24 zu.

Auf der Stirnfläche 70 stehen die Hairpinenden, d. h. die Enden der Schenkel 20a, 20b der Hairpins 18 beim Vorstecken auf. Diese Stirnflächen 70 dienen als Art "Zwischenboden" und sind somit ein Ausführungsbeispiel für die Stützeinrichtung 46.

Durch die Mantelfläche 74 werden die Hairpins 18, insbesondere deren Schenkel 20a, 20b, nachdem sie in die Kranzpositioniereinrichtung 26 aufgenommen worden sind und sich insbesondere in der Lagerposition 32 befinden, radial positioniert. Die Mantelflächen 74, der Ringmantel 36 und die radialen Stege 38 bilden ein Beispiel für die Halteeinrichtung 48.

Die Schieber 52 lassen sich gesteuert durch die Steuerung 30 in eine vollständig eingefahrene Position und in die eine Position zum Stützen des jeweiligen Kranzes, der gerade vorgesteckt werden soll, verfahren. Somit lassen sich die Schieber bei einer Anzahl von n Kränzen (beispielsweise n = 3 bei einem ersten bis dritten Kranz 14a, 14b, 14c) in n+1 Positionen einfahren.

Bei der hier dargestellten Ausgestaltung mit außen angeordneter Sammelaufnahme 12 und innen angeordneter Kranzpositioniereinrichtung 26 ist es vorteilhaft, als ersten Kranz 14a zunächst einen Außenkranz zu stecken, dann als zweiten Kranz 14b einen Mittelkranz zu stecken und schließlich als dritten Kranz 14c einen Innenkranz zu stecken. Zum Vorstecken des Außenkranzes sind die Schieber 52 radial nach außen ausgefahren. Zum Vorstecken des Mittelkranzes werden die Schieber radial nach außen gefahren, vorzugsweise derart, dass sie an den Außenkranz, welcher sich in der Lagerposition 32 befinden, anliegen. Zum Vorstecken des Innenkranzes sind der Außenkranz und der Mittelkranz in der Lagerposition, und die Schieber sind radial nach außen ausgefahren, vorzugsweise anliegend an dem Mittelkranz. Um die Kranzanordnung mit den drei konzentrischen Kränzen 14a, 14b, 14c zu bilden, sind die Schieber 52 radial ganz nach innen eingefahren, so dass sich der erste bis dritte Kranz 14a-14c in der Lagerposition 32 zueinander ausrichten.

Im Folgenden werden eine Ausbildung einer Kranzanordnung aus dem ersten bis dritten Kranz 14a-14c, beginnend mit dem Außenkranz als erster Kranz 14a und endend mit dem Innenkranz als dritten Kranz 14c, sowie ein Kranzanordnungsverfahren zum Ausbilden einer solchen Kranzanordnung anhand der Darstellung in den Fig. 2 und 13 bis 28 näher erläutert.

Fig. 13 zeigt die Grundstellung, in der die Schieber 52 der Kranzpositioniereinrichtung 26 maximal radial nach außen ausgefahren sind und somit den Zwischenboden für die Enden der Schenkel 20a, 20b der Hairpins 18 des ersten Kranzes 14a bilden. Diese Grundstellung ist auch in Fig. 8 gezeigt. Schieberbleche 76, an denen die Schrägnuten 64 ausgebildet sind und auf welchen die Schieber 52 mit ihren Schiebernuten 72 aufsitzen, sind durch das Umsetzgetriebe 58 maximal nach außen gefahren. Die Schubstange 60 ist maximal nach oben bewegt.

In dieser Grundstellung der Kranzpositioniereinrichtung 26 werden die Hairpins 18 einzeln mit der Greifeinrichtung 28 aufgenommen und wie in Fig. 2 dargestellt in die Nuten 24 gesteckt. Die bereits gesteckten Hairpins 18 stehen dabei mit ihren Schenkeln 20a, 20b auf den Stirnflächen 70 auf.

Die Greifeinrichtung 28 ist hierzu in einem hier nicht näher dargestellten Handhabungsgerät, wie insbesondere einem Roboterarm befestigt und greift mit einem ersten Greifer 78 und einem zweiten Greifer 80 die jeweiligen Schenkel 20a, 20b der Hairpins 18. Die Greifer 78, 80 sind hierzu relativ zueinander beweglich. Dies alles erfolgt über die Steuerung 30. Für nähere Einzelheiten eines derzeit bevorzugten Ausführungsbeispiels der Greifeinrichtung 28 wird auf die deutsche Patentanmeldung DE 10 2019 114 221.0 verwiesen.

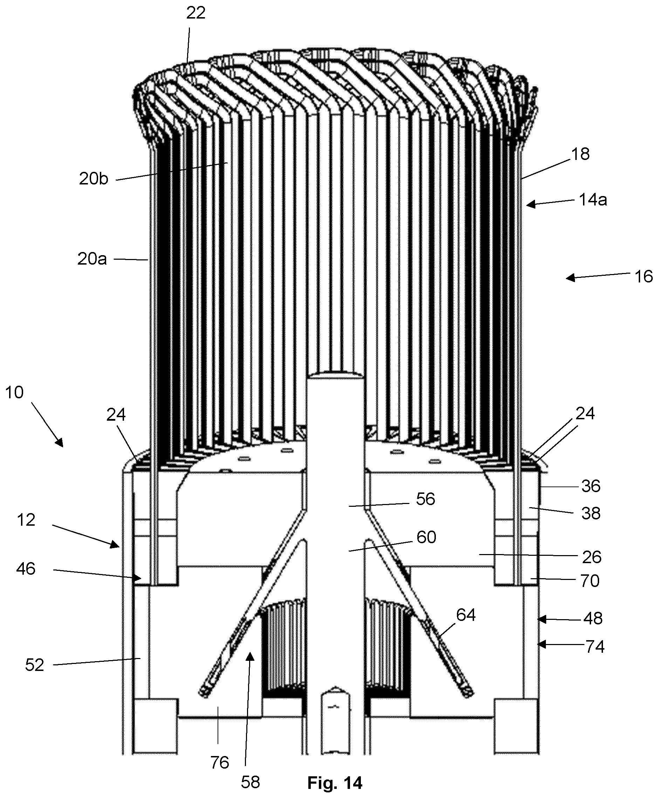

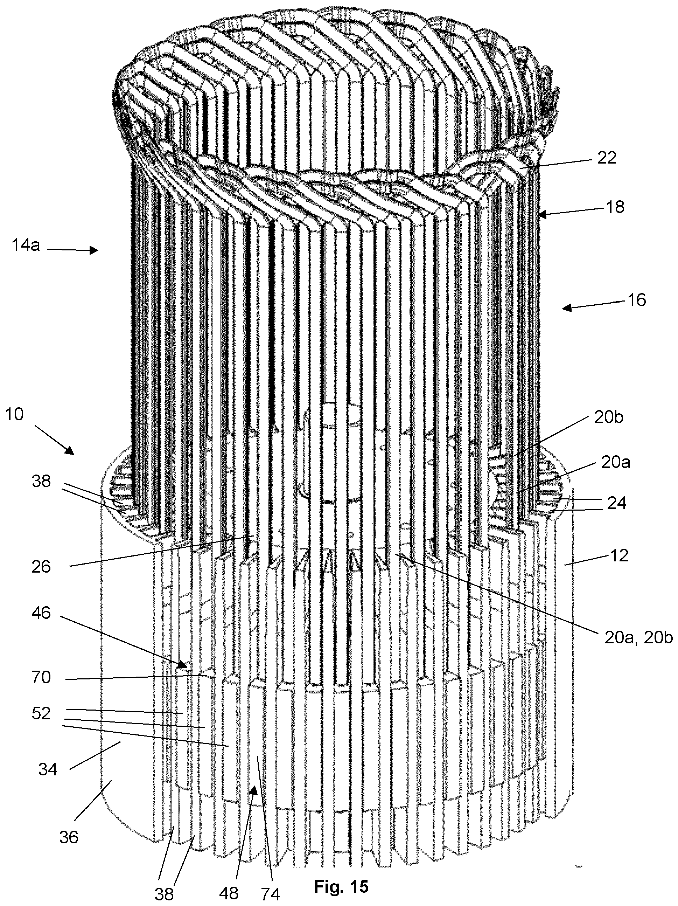

Die Fig. 14 und 15 zeigen den vorgesteckten Außenkranz - erster Kranz 14a - wobei die Enden der Schenkel 20a, 20b der Hairpins 18 auf den Stirnflächen 70 der Schieber 52 aufstehen. In Fig. 15 ist hierzu die Sammelaufnahme 12 aufgeschnitten dargestellt.

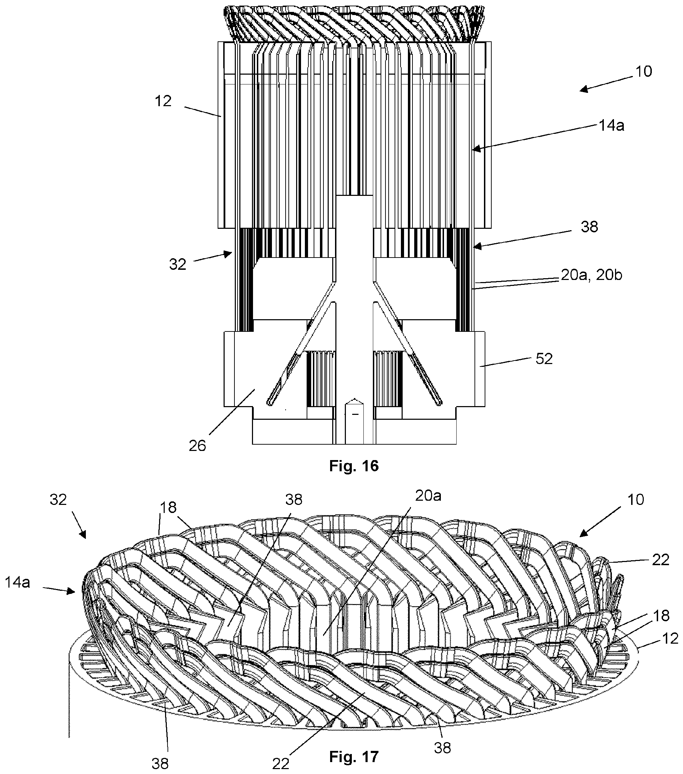

Ist dann der erste Kranz 14a vollständig gesteckt, wird, wie in Fig. 16 gezeigt, die Kranzpositioniereinrichtung 26 relativ zu der Sammelaufnahme 12 axial nach unten gefahren. Hierdurch werden auch die Hairpins 18 des ersten Kranzes 14a - Außenkranz - nach unten gefahren. Der erste Kranz 14a bewegt sich ebenfalls nach unten, da die Schenkel 20a, 20b auf den Stirnflächen 70 der Schieber 52 aufstehen.

In der Lagerposition 32 liegen, wie in Fig. 17 dargestellt, die Hairpins 18 mit ihrer Dachbiegung 22 auf den radialen Stegen 38 der Sammelaufnahme 12 auf, wenn die Kranzpositioniereinrichtung 26 nach unten bewegt worden ist. Demnach stehen die Schenkel 20a, 20b nicht mehr auf den Stirnflächen 70 auf.

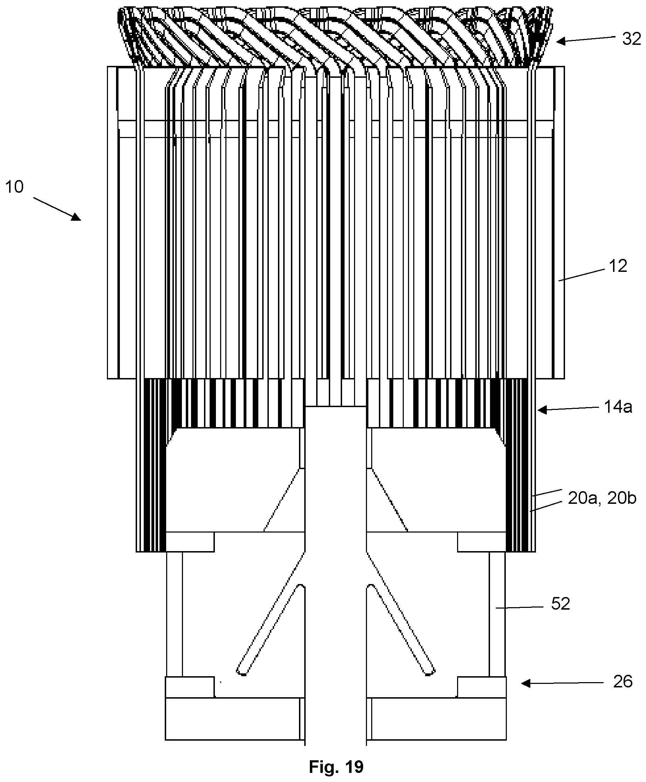

Die Schieber 52 werden durch Bewegung des Betätigungselements 56 radial nach innen eingefahren, bis die in Fig. 19 dargestellte eingezogene Stellung erreicht wird.

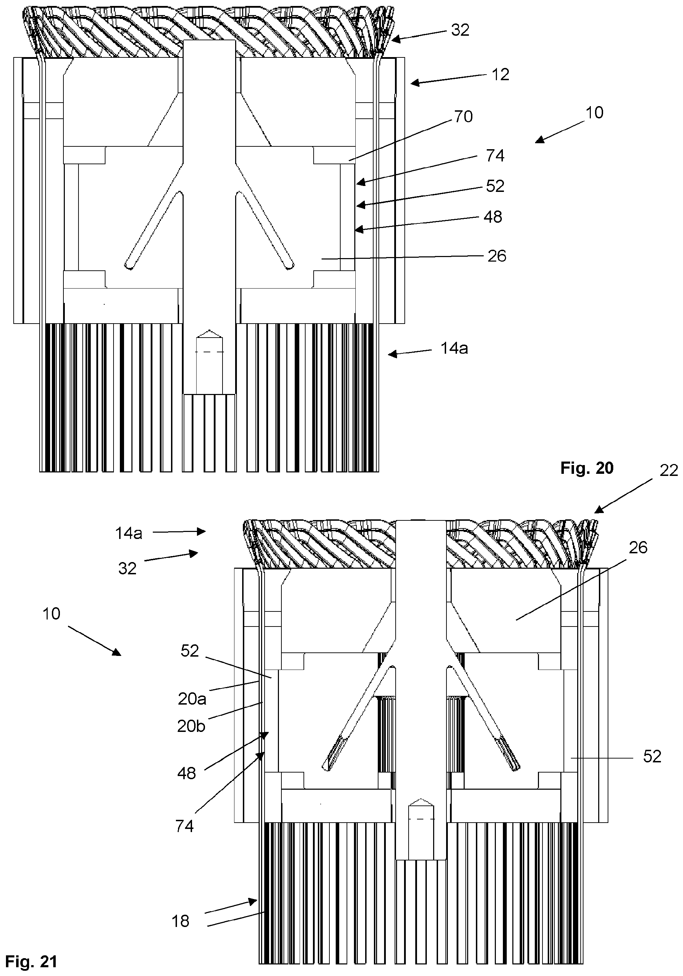

Wie in Fig. 20 dargestellt, wird die Kranzpositioniereinrichtung 26 dann relativ zu der Sammelaufnahme 12 axial nach oben bewegt.

Anschließend werden, wie dies in Fig. 21 dargestellt ist, die Schieber 52 der Kranzpositioniereinrichtung 26 radial nach außen ausgefahren, bis sie an dem ersten Kranz 14a - Außenkranz - anliegen. So wird der erste Kranz 14a positioniert.

Durch das Positionieren des ersten Kranzes 14a wird genügend Platz geschaffen, um den zweiten Kranz 14b - hier zum Beispiel den Mittelkranz - vorzustecken. Das Stecken des zweiten Kranzes 14b erfolgt dann mit sich in Lagerposition 32 befindlichen ersten Kranz, wie dies in Fig. 3 dargestellt ist. Auch hier werden die Hairpins 18 des zweiten Kranzes 14b mit der Greifeinrichtung 28, wie dies für den ersten Kranz 14a in Fig. 2 dargestellt ist, einzeln vorgesteckt.

Ist der Mittelkranz - zweiter Kranz 14b - fertiggesteckt, so wird auch dieser Mittelkranz wie zuvor anhand des Beispiels des Außenkranzes beschrieben in die Lagerposition 32 überführt, und die Prozessfolge beginnt von Neuem für den Innenkranz - dritter Kranz 14c.

Bei dem zuvor erläuterten Verfahren wurde der erste Kranz 14a durch axiale Relativbewegung der Kranzpositioniereinrichtung 26 mit auf den ausgefahrenen Schiebern 52 aufliegenden Schenkeln 20a, 20b aktuatorbetätigt nach unten gefahren.

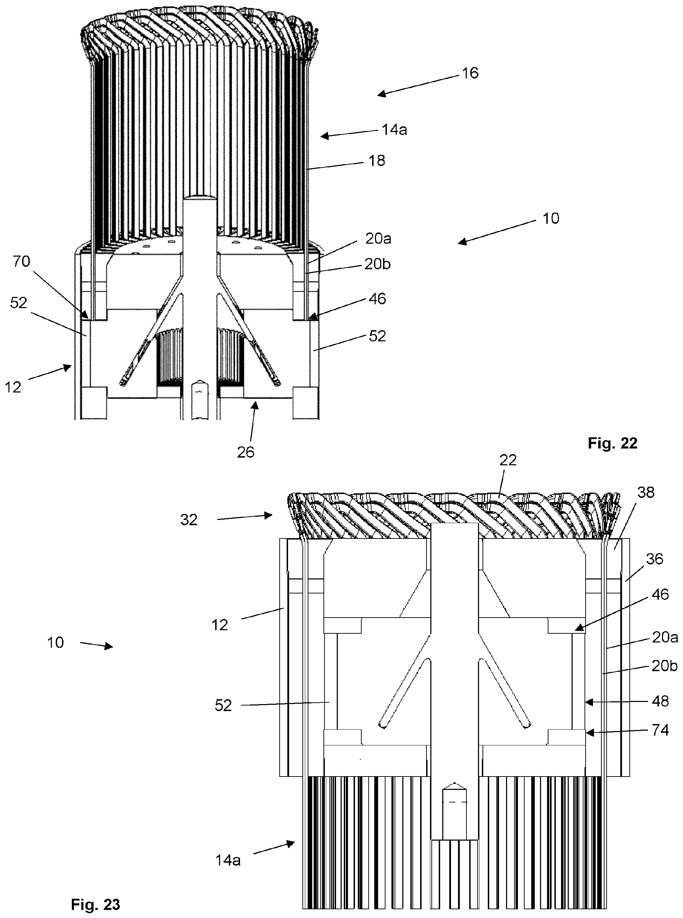

Im Folgenden wird anhand der Fig. 22 bis 24 eine alternative Vorgehensweise zum Überführen des ersten Kranzes 14a aus der Steckposition 16 in die untere Lagerposition 32 erläutert.

Fig. 22 zeigt dabei wiederum den Ausgangszustand, wobei die Kranzpositioniereinrichtung 26 in Grundstellung mit ausgefahrenen Schiebern 52 ist und der erste Kranz 14a in der Steckposition 16 vorgesteckt worden ist, wobei die Schenkel 20a, 20b auf den Stirnflächen der ausgefahrenen Schieber 52 aufstehen.

Anschließend wird, wie in Fig. 23 dargestellt das Betätigungselement 56 bewegt; die Schieber 52 werden eingefahren. Der erste Kranz 14a fällt durch Schwerkraft nach unten, bis die Hairpins 18 auf den Stegen 38 aufliegen. So befindet sich der erste Kranz 14a in der Lagerposition 32.

Anschließend werden die Schieber 52 der Kranzpositioniereinrichtung 26 radial nach außen ausgefahren, bis sie am ersten Kranz 14a anliegen. Dadurch wird der erste Kranz 14a positioniert, und es wird ausreichend Platz zum Vorstecken des zweiten Kranzes 14b geschaffen. Anschließend wird der zweite Kranz 14b vorgesteckt, wobei die Schenkel 20a, 20b von dessen Hairpins 18 auf den Stirnflächen 70 der Schieber 52 aufliegen. Anschließend werden die Schieber 52 wieder eingefahren, um dann den fertiggesteckten zweiten Kranz 14b durch Schwerkraft und Fallenlassen in die Lagerposition 32 zu überführen.

Bei einer weiteren, hier nicht näher dargestellten Ausgestaltung ist die Sammelaufnahme beispielsweise entlang einer horizontalen Ebene in ein oberes Sammelaufnahmeteil und ein unteres Sammelaufnahmeteil aufgeteilt, die durch einen Aktor axial zueinander beweglich sind. Die Sammelaufnahmeteile können entsprechend ringförmig ausgebildet sein. Das obere Sammelaufnahmeteil kann beispielsweise in einer zu den Fig. 14 und 15 vergleichbaren Stellung nach oben verfahren werden, bis die Hairpins 18 auf den Stegen 38 aufliegen, während das untere Sammelaufnahmeteil und die Kranzpositioniereinrichtung 26 am Ort verbleiben. Anschließend werden die Schieber 52 eingefahren. Die Hairpins 18 werden durch das obere Sammelaufnahmeteil gehalten. Das obere Sammelaufnahmeteil wird relativ zu dem unteren Sammelaufnahmeteil und der Kranzpositioniereinrichtung 26 nach unten gefahren, wodurch der erste Kranz 14a sanft in die Lagerposition 32 überführt wird. Anschließend werden die Schieber 52 der Kranzpositioniereinrichtung 26 radial nach außen ausgefahren, bis sie am ersten Kranz 14a anliegen. Dadurch wird der erste Kranz 14a positioniert, und es wird ausreichend Platz zum Vorstecken des zweiten Kranzes 14b geschaffen. Anschließend wird der zweite Kranz 14b vorgesteckt, wobei die Schenkel 20a, 20b von dessen Hairpins 18 auf den Stirnflächen 70 der Schieber 52 aufliegen. Dann erfolgt wieder ein Hochfahren des oberen Sammelaufnahmeteils, bis auch die Hairpins 18 des zweiten Kranzes 14b auf den Stegen 38 aufliegen. Die beiden Kränze 14a und 14b werden dann durch Zurückfahren des oberen Sammelaufnahmeteils in die Lagerposition 32 überführt, um den dritten Kranz 14c zu stecken.

Das Vorstecken bei dieser Ausgestaltung hat somit in einer bevorzugten Ausführung die folgenden Schritte:
1. Vorstecken des Außenkranzes - erster Kranz 14a
2. Anheben des Sammelaufnahme-Oberteils, Schieber 52 radial nach innen einfahren
3. Absenken des Sammelaufnahme-Oberteils, Schieber 52 radial nach außen ausfahren
4. Vorstecken des Mittelkranzes - zweiter Kranz 14b
5. Anheben des Sammelaufnahme-Oberteils, Schieber radial nach innen einfahren
6. Absenken des Sammelaufnahme-Oberteils, Radialschieber radial nach außen ausfahren
7. Vorstecken des Innenkranzes - dritter Kranz 14c
8. Anheben des Sammelaufnahme-Oberteils, Radialschieber radial nach außen ausfahren
9. Absenken des Sammelaufnahme-Oberteils, Ausheben mit Fügeeinrichtung möglich

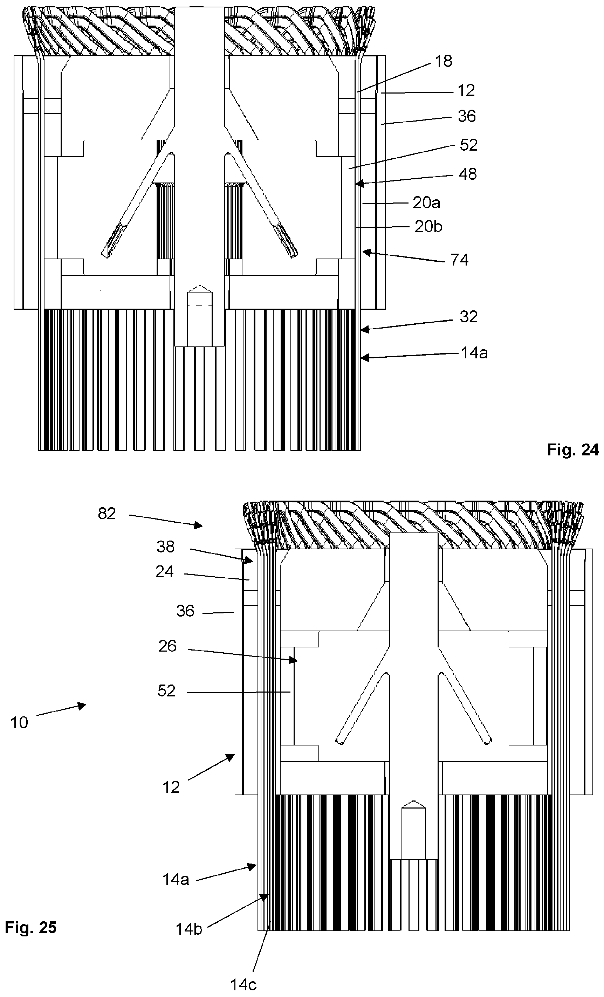

Bei allen voranstehend beschriebenen Vorgehensweisen ergibt sich nach dem Stecken des ersten bis dritten Kranzes 14a-14c die in Fig. 25 verdeutlichte Situation, wo sich alle Kränze 14a-14c in der Lagerposition 32 befinden und auf den Stegen 38 der Sammelaufnahme 12 aufliegen.

Das Ausheben der so gebildeten Kranzanordnung 82 erfolgt vorzugsweise mit der aus [1] oder [2] bekannten Fügeeinrichtung. Hierzu ist vorteilhaft, wenn die Kranzanordnung 82 aus der Sammelaufnahme 12 vorsteht, d. h. wenn alle Kränze 14a, 14b, 14c in konzentrischer Position an der Steckposition 16 befindlich sind.

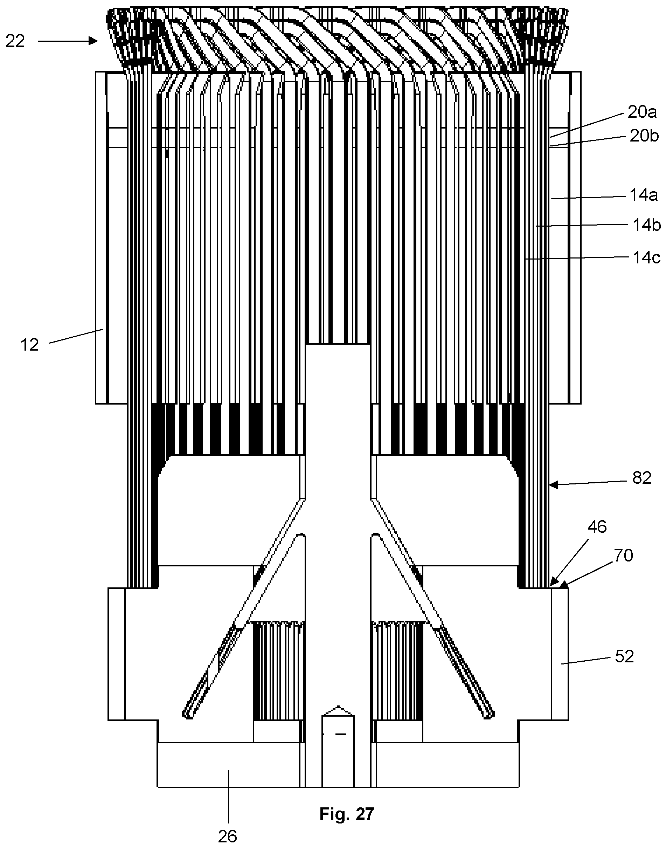

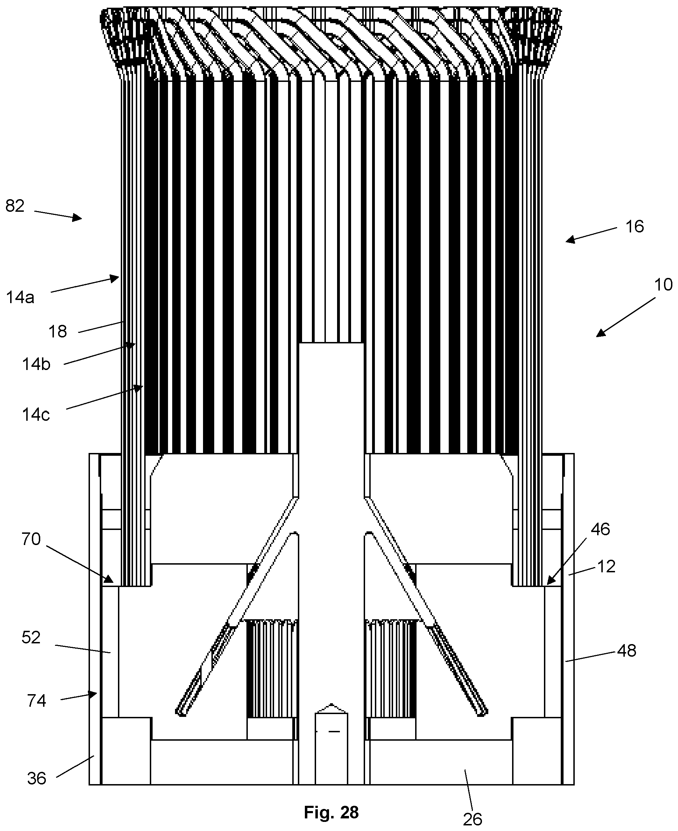

Hierzu wird aus der in Fig. 25 dargestellten Position heraus die Kranzpositioniereinrichtung 26 axial relativ zu der Sammelaufnahme 12 nach unten bewegt, bis sich die Schieber 52 unterhalb der Schenkel 20a, 20b befinden. Anschließend werden die Schieber 52, wie in Fig. 27 gezeigt, ausgefahren, und dann wird die Kranzpositioniereinrichtung 26 wieder relativ zu der Sammelaufnahme 12 axial nach oben bewegt. Die Schenkel 20a, 20b aller Hairpins 18 der Kranzanordnung 82 - erster bis dritter Kranz 14a-14c - stehen dann auf den Stirnflächen 70 der Schieber 52 auf. Anschließend wird, wie in Fig. 28 dargestellt, die Kranzanordnung 82 durch relative axiale Verschiebung der Kranzpositioniereinrichtung 26 bezüglich der Sammelaufnahme 12 nach oben bewegt. In der in Fig. 28 gezeigten Stellung kann dann die Kranzanordnung 82 durch die hier nicht dargestellte aber aus [1] und [2] bekannte Fügeeinrichtung entnommen und in das Statorgehäuse eingefügt werden.

### Bezugszeichenliste:

- 10: Kranzanordnungsvorrichtung
- 12: Sammelaufnahme
- 14a: erster Kranz
- 14b: zweiter Kranz
- 14c: dritter Kranz
- 16: axiale Steckposition
- 18: Hairpin
- 20a: erster Schenkel
- 20b: zweiter Schenkel
- 22: Dachbiegung
- 24: Nut
- 26: Kranzpositioniereinrichtung
- 28: Greifeinrichtung
- 30: Steuerung
- 32: Lagerposition
- 34: Nutbegrenzung
- 36: Ringmantel
- 38: radialer Steg
- 40: Öffnung
- 42: radialer Vorsprung
- 44: Ringflansch
- 46: Stützeinrichtung
- 48: Halteeinrichtung
- 50: Zustelleinheit
- 52: Schieber
- 54: Grundkörper
- 56: Betätigungselement
- 58: Umsetzgetriebe
- 60: Schubstange
- 62: Kegelflansch
- 64: Schrägnut
- 66: obere Schieberführung
- 68: untere Schieberführung
- 70: Stirnfläche
- 72: Schiebernut
- 74: Mantelfläche
- 76: Schieberblech
- 78: erster Greifer
- 80: zweiter Greifer
- 82: Kranzanordnung

## Patentansprüche

1. Kranzanordnungsvorrichtung (10) zum Bilden einer Kranzanordnung (82) aus mehreren konzentrisch angeordneten Kränzen (14a, 14b, 14c) von vorzugsweise U-förmigen elektrischen Leitern, um eine Spulenwicklung eines Bauteils einer elektrischen Maschine zu bilden, umfassend
eine Sammelaufnahme (12) mit mehreren um eine Achse ringförmig angeordneten und durch radiale Stege (38) begrenzten Nuten (24) und
eine Kranzpositioniereinrichtung (26) zum relativen axialen Positionieren eines oder mehrerer der Kränze (14a, 14b, 14c),
wobei die Kranzpositioniereinrichtung (26) eine Stützeinrichtung (46) zum Stützen der elektrischen Leiter eines zu steckenden Kranzes (14a, 14b, 14c) in einer axialen Steckposition (16), bei der die Leiter aus der Sammelaufnahme (12) weiter vorstehen, und eine Halteeinrichtung (48) zum Halten der Leiter eines fertig gesteckten Kranzes (14a, 14b, 14c) in einer Lagerposition (32), in der die Leiter des fertig gesteckten Kranzes (14a, 14b, 14c) weiter in die Sammelaufnahme (12) eingefahren sind, aufweist und dazu ausgebildet ist, mit der Stützeinrichtung (46) die Leiter eines zu steckenden zweiten Kranzes (14b) zu stützen, während die Halteeinrichtung (48) die Leiter eines fertig gesteckten ersten Kranzes (14a) in der Lagerposition (32) hält, wobei die Nuten (24) der Sammelaufnahme (12) jeweils eine sich in Umfangsrichtung erstreckende Nutbegrenzung (34) an einer ersten radialen Seite aufweisen und an einer zweiten radialen Seite jeweils eine Öffnung (40) aufweisen, und
wobei die Kranzpositioniereinrichtung (26) in die Öffnung (40) eingreifende radial bewegliche oder radial und axial bewegliche Kranzpositionier-Schieber aufweist, **dadurch gekennzeichnet,**
**dass** die Stützeinrichtung (46) und die Halteeinrichtung (48) an den Kranzpositionier-Schiebern ausgebildet sind und dass die Halteeinrichtung (48) eine gegen die Nutbegrenzung (34) verfahrbare Mantelfläche (74) an den einzelnen Kranzpositionier-Schiebern aufweist, so dass die Leiter zwischen der Mantelfläche (74) und der Nutbegrenzung (34) positioniert werden können.

2. Kranzanordnungsvorrichtung (10) nach Anspruch 1,
**dadurch gekennzeichnet,**
**dass** die Nutbegrenzung (34) an den Stegen und/oder an einem Ringbereich der Sammelaufnahme (12) ausgebildet ist.

3. Kranzanordnungsvorrichtung (10) nach einem der voranstehenden Ansprüche, **dadurch gekennzeichnet,**
**dass** die Stützeinrichtung (46) an einer sich quer zu der Achse erstreckenden Stirnfläche (70) der einzelnen Kranzpositionier-Schieber ausgebildete Anschläge für die Leiter aufweist.

4. Kranzanordnungsvorrichtung (10) nach einem der voranstehenden Ansprüche,
**dadurch gekennzeichnet,**
**dass** die Öffnungen (40) der Nuten (24) an einer inneren radialen Seite ausgebildet sind und dass eine Kranzpositionier-Schieber-Bewegungseinrichtung zum radialen und/oder axialen Bewegen der Kranzpositionier-Schieber radial innerhalb der Sammelaufnahme (12) anordenbar ist.

5. Kranzanordnungsvorrichtung (10) nach einem der voranstehenden Ansprüche,
**dadurch gekennzeichnet,**
**dass** die Lagerposition (32) eine Anschlagposition ist, an der die vorzugsweise U-förmigen Leiter mit ihrem U-förmigen Ende an der Sammelaufnahme (12) anschlagen und dadurch positionierbar sind.

6. Kranzanordnungsvorrichtung (10) nach einem der voranstehenden Ansprüche,
**gekennzeichnet durch** eine Greifeinrichtung (28) zum Greifen und Stecken der Leiter zu einem Kranz (14a, 14b, 14c) und eine Steuerung (30) zum Steuern der Kranzpositioniereinrichtung (26) und der Greifeinrichtung (28).

7. Kranzanordnungsvorrichtung (10) nach Anspruch 6,
**dadurch gekennzeichnet,**
**dass** die Steuerung (30) dazu ausgebildet ist, die Greifeinrichtung (28) und die Kranzpositioniereinrichtung (26) anzusteuern zum:
einzelnen Stecken einzelner elektrischer Leiter in die Nuten (24) der Sammelaufnahme (12) an der axialen Steckposition (16), an der die Leiter weiter aus der Sammelaufnahme (12) axial vorstehen, um einen ersten Kranz (14a) zu bilden,
axialen Verlagern des ersten Kranzes (14a) aus der axialen Steckposition (16) weiter in die Sammelaufnahme (12) hinein in die Lagerposition (32),
einzelnen Stecken einzelner elektrischer Leiter in die Nuten (24) der Sammelaufnahme (12) an der axialen Steckposition (16), um einen zweiten Kranz (14b) zu bilden, während der erste Kranz (14a) an der Lagerposition (32) gehalten wird, und
axialen Verlagern des zweiten Kranzes (14b) in die Lagerposition (32).

8. Kranzanordnungsverfahren zum Bilden einer Kranzanordnung (82) aus mehreren konzentrisch angeordneten Kränzen (14a, 14b, 14c) von vorzugsweise U-förmigen elektrischen Leitern, um eine Spulenwicklung eines Bauteils einer elektrischen Maschine zu bilden, umfassend
a) einzelnes Stecken einzelner elektrischer Leiter in um eine Achse ringförmig angeordnete und durch radiale Stege (38) begrenzte Nuten (24) einer Sammelaufnahme (12) an einer axialen Steckposition (16), an der die Leiter weiter aus der Sammelaufnahme (12) axial vorstehen, um einen ersten Kranz (14a) zu bilden,
b) axiales Verlagern des ersten Kranzes (14a) aus der axialen Steckposition (16) weiter in die Sammelaufnahme (12) hinein in eine Lagerposition (32),
c) einzelnes Stecken einzelner elektrischer Leiter in die Nuten (24) der Sammelaufnahme (12) an der axialen Steckposition (16), um einen zweiten Kranz (14b) zu bilden, während der erste Kranz (14a) an der Lagerposition (32) gehalten wird, und
d) axiales Verlagern des zweiten Kranzes (14b) in die Lagerposition (32).

9. Kranzanordnungsverfahren nach Anspruch 8,
**gekennzeichnet durch**
e) einzelnes Stecken einzelner elektrischer Leiter in die Nuten (24) der Sammelaufnahme (12) an der Steckposition, um einen dritten Kranz (14c) zu bilden, während der erste und der zweite Kranz (14a, 14b, 14c) an der Lagerposition (32) gehalten wird, und
f) axiales Verlagern des dritten Kranzes (14c) in die Lagerposition (32).

10. Kranzanordnungsverfahren nach einem der Ansprüche 8 oder 9,
**dadurch gekennzeichnet**,
10.1 dass als erster Kranz (14a) ein äußerer Kranz gesteckt wird und der zweite Kranz (14b) weiter radial innen als der erste Kranz (14a) gesteckt wird und/oder
10.2 dass als zweiter Kranz (14b) ein mittlerer Kranz gesteckt wird und/oder
10.3 dass als dritter Kranz (14c) ein innerer Kranz gesteckt wird und/oder
10.4 dass die Leiter beim Stecken durch bewegliche Anschläge abgestützt werden, so dass sie beim Stecken an der Steckposition verbleiben und/oder
10.5 dass das axiale Verlagern durch Fallenlassen erfolgt und/oder
10.6 dass das Halten wenigstens eines bereits vorher gesteckten Kranzes (14a, 14b, 14c) an der Lagerposition (32) durch Klemmen der Leiter zwischen einem Kranzanordnungs-Schieber und einem Ringbereich der Sammelaufnahme (12) erfolgt und/oder
10.7 dass das axiale Verlagern mittels Schwerkraft durch Wegbewegen einer Stützeinrichtung (46) erfolgt und/oder
10.8 dass das axiale Verlagern durch eine Relativbewegung zwischen der Sammelaufnahme (12) und einer Kranzpositioniereinrichtung (26) erfolgt; und/oder
10.9 dass das axiale Verlagern durch eine Relativbewegung zwischen einem oberen Teil und einem unteren Teil der Sammelaufnahme (12) oder zwischen einem oberen Teil der Sammelaufnahme und einer Kranzpositioniereinrichtung (26) erfolgt.

11. Kranzanordnungsverfahren nach einem der Ansprüche 8 bis 10,
**dadurch gekennzeichnet,**
**dass** das axiale Verlagern des jeweiligen Kranzes aus der Steckposition in eine tiefere Anschlagsposition als Lagerposition (32) erfolgt, in der die U-förmigen Enden der Leiter auf Stegen der Sammelaufnahme (12), welche die Nuten (24) in Umfangsrichtung begrenzen, aufliegen.

12. Kranzanordnungsverfahren nach einem der Ansprüche 8 bis 11,
**dadurch gekennzeichnet,**
**dass** das Kranzanordnungsverfahren mit einer Kranzanordnungsvorrichtung (10) nach einem der Ansprüche 1 bis 7 durchgeführt wird.

13. Kranzanordnungsverfahren nach einem der Ansprüche 8 bis 12,
**gekennzeichnet durch**
Anheben der aus wenigstens dem ersten und dem zweiten Kranz (14a, 14b) gebildeten Kranzanordnung (82) aus der Lagerposition (32) in eine angehobene Position zur Übergabe an eine gesonderte Fügevorrichtung zum Einfügen der Kranzanordnung (82) in das Bauteil.

14. Computerprogrammprodukt, umfassend Steueranweisungen, die, wenn in eine Steuerung einer Kranzanordnungsvorrichtung (10) nach einem der Ansprüche 1 bis 7 geladen, die Kranzanordnungsvorrichtung (10) veranlassen, das Kranzanordnungsverfahren nach einem der Ansprüche 8 bis 13 durchzuführen.

## Claims

1. Ring assembly device (10) for forming a ring assembly (82) from a plurality of concentrically arranged rings (14a, 14b, 14c) of preferably U-shaped electrical conductors to form a coil winding of a component of an electrical machine, comprising
a collective receptacle (12) having several grooves (24) annularly arranged around an axis and bounded by radial webs (38), and
a ring positioning device (26) for the relative axial positioning of one or more of the rings (14a, 14b, 14c),
wherein the ring positioning device (26) comprises a support device (46) to support the electrical conductors of a ring (14a, 14b, 14c) to be plugged in an axial plug position (16) in which the conductors protrude further from the collective receptacle (12), and a holding device (48) for holding the conductors of a finished ring (14a, 14b, 14c) in a storage position (32) in which the conductors of the finished ring (14a, 14b, 14c) are retracted further into the collective receptacle (12), and wherein the ring positioning device (26) is designed to support, with said support device (46), the conductors of a second ring (14b) to be formed while the holding device (48) holds the conductors of a finished first ring (14a) in the storage position (32), wherein the grooves (24) of the collective receptacle (12) each have a groove boundary (34) extending in the circumferential direction on a first radial side and an opening (40) on a second radial side, and
wherein the ring positioning device (26) has radially movable or radially and axially movable ring positioning pushers engaging in the opening (40),
**characterized in that**
the support device (46) and the holding device (48) are formed on the ring positioning pushers and that the holding device (48) has a lateral surface (74) on the individual ring positioning pushers which can be moved against the groove boundary (34) so that the conductors can be positioned between the lateral surface (74) and the groove boundary (34).

2. Ring assembly device (10) according to claim 1,
**characterized in that**
the groove boundary (34) is formed on the webs and/or on a ring area of the collective receptacle (12).

3. Ring assembly device (10) according to any one of the preceding claims,
**characterized in that**
the support device (46) comprises stops for the conductors which are formed on an end face (70) of the individual ring positioning pushers which extends transversely to the axis.

4. Ring assembly device (10) according to any one of the preceding claims,
**characterized in that**
the openings (40) of the grooves (24) are formed on an inner radial side and that a ring positioning pusher movement device for radially and/or axially moving the ring positioning pushers can be arranged radially inside the collective receptacle (12).

5. Ring assembly device (10) according to any one of the preceding claims,
**characterized in that**
the storage position (32) is a stop position at which the preferably U-shaped conductors abut with their U-shaped ends against the collective receptacle (12) and can thus be positioned.

6. Ring assembly device (10) according to any one of the preceding claims,
**characterized by**
a gripping device (28) for gripping and plugging the conductors to form a ring (14a, 14b, 14c), and a controller (30) for controlling the ring positioning device (26) and the gripping device (28).

7. Ring assembly device (10) according to claim 6,
**characterized in that**
the controller (30) is configured to control the gripping device (28) and the ring positioning device (26) for:
individually plugging single electrical conductors into the grooves (24) of the collective receptacle (12) at the axial plug position (16) where the conductors protrude further axially from the collective receptacle (12) to form a first ring (14a), axially displacing the first ring (14a) from the axial plug position (16) further into the collective receptacle (12) into the storage position (32),
individually plugging single electrical conductors into the grooves (24) of the collective receptacle (12) at the axial plug position (16) to form a second ring (14b) while the first ring (14a) is held in the storage position, and
axially displacing the second ring (14b) into the storage position (32).

8. Ring assembly method for forming a ring assembly (82) from several concentrically arranged rings (14a, 14b, 14c) of preferably U-shaped conductors to form a coil winding of a component of an electrical machine, the method comprising the steps of:
a) individually plugging single conductors into grooves (24) of a collective receptacle (12) which are annularly arranged around an axis and are bounded by radial webs (38), at a first plug position at which the conductors axially protrude further from the collective receptacle (12) to form a first ring (14a),
b) axially displacing the first ring (14a) from the axial plug position (16) further into the collective receptacle (12) into a storage position (32),
c) individually plugging single electrical conductors into the grooves (24) of the collective receptacle (12) at the axial plug position (16) to form a second ring (14b) while the first ring (14a) is held at the storage position (32), and
d) axially displacing the second ring (14b) into the storage position (32).

9. Ring assembly method according to claim 8,
**characterized by**
e) individually plugging single conductors into the grooves (24) of the collective receptacle (12) at the plug position to form a third ring (14c) while the first and the second ring (14a, 14b, 14c) are held at the storage position (32), and
f) axially displacing the third ring (14c) into the storage position (32).

10. Ring assembly method according to any one of claims 8 or 9,
**characterized in that**
10.1 an outer ring is plugged as the first ring (14a) and the second ring (14b) is plugged further radially inward than the first ring (14a), and/or
10.2 a middle ring is plugged as the second ring (14b), and/or
10.3 an inner ring is plugged as the third ring (14), and/or
10.4 the conductors are supported during plugging by movable stops so as to remain at the plug position during plugging, and/or
10.5 the axial displacement takes place by dropping, and/or
10.6 holding of at least one of the previously plugged rings (14a, 14b, 14c) at the storage position (32) takes place by clamping the conductors between a ring assembly pusher and a ring area of the collective receptacle (12), and/or
10.7 the axial displacement takes place by gravity by a support device (46) being moved away, and/or
10.8 the axial displacement takes place by a relative movement between the collective receptacle (12) and a ring positioning device (26); and/or
10.9 the axial displacement takes place by a relative movement between an upper part and a lower part of the collective receptacle (12) or between an upper part of the collective receptacle and a ring positioning device (26).

11. Ring assembly method according to any one of claims 8 to 10,
**characterized in that**
the axial displacement of the respective ring takes place from the plug position into a deeper stop position as a storage position (32), in which the U-shaped ends of the conductors are supported on webs of the collective receptacle (12) bounding the grooves (24) in the circumferential direction.

12. Ring assembly method according to any one of claims 8 to 11,
**characterized in that**
the ring assembly method is carried out using a ring assembly device (10) according to any one of claims 1 to 7.

13. Ring assembly method according to any one of claims 8 to 12,
**characterized by**
lifting the ring assembly (82) formed from at least the first and the second ring (14a, 14b) from the storage position (32) into a raised position for transfer to a separate joining device for inserting the ring assembly (82) into the component.

14. Computer program product comprising control instructions which when loaded to a controller of a ring assembly device (10) according to any one of claims 1 to 7 cause the ring assembly device (10) to carry out the ring assembly method according to any one of claims 8 to 13.

## Revendications

1. Dispositif d'agencement de couronne (10) pour former un agencement de couronne (82) à partir d'une pluralité de couronnes (14a, 14b, 14c) de conducteurs électriques de préférence en forme de U disposées concentriquement afin de former un enroulement de bobine d'un composant d'une machine électrique, le dispositif comprenant
un réceptacle collectif (12) comportant plusieurs rainures (24) disposées de manière annulaire autour d'un axe et délimitées par des nervures radiales (38), et
un dispositif de positionnement de couronne (26) pour le positionnement axial relatif d'un ou plusieurs couronnes (14a, 14b, 14c),
dans lequel le dispositif de positionnement de couronne (26) comprend un dispositif de support (46) pour supporter les conducteurs électriques d'une couronne (14a, 14b, 14c) à enficher dans une position d'enfichage axiale (16) dans laquelle les conducteurs font davantage saillie hors du réceptacle collectif (12), et un dispositif de maintien (48) destiné à maintenir les conducteurs d'une couronne déjà composée (14a, 14b, 14c) dans une position de stockage (32) dans laquelle les conducteurs de la couronne déjà composée (14a, 14b, 14c) sont rétractés davantage dans le réceptacle collectif (12), et dans lequel le dispositif de positionnement de couronne (26) est conçu pour supporter, avec ledit dispositif de support (46), les conducteurs d'une deuxième couronne (14b) à enficher tandis que le dispositif de maintien (48) maintient les conducteurs d'une première couronne déjà finie (14a) dans la position de stockage (32), dans lequel les rainures (24) du réceptacle collectif (12) présentent chacune une limite de rainure (34) s'étendant dans la direction circonférentielle sur un premier côté radial et une ouverture (40) sur un deuxième côté radial, et
dans lequel le dispositif de positionnement de couronne (26) comporte des poussoirs de positionnement de couronne mobiles radialement ou radialement et axialement qui s'engagent dans l'ouverture (40),
**caractérisé en ce que**
le dispositif de support (46) et le dispositif de maintien (48) sont formés sur les poussoirs de positionnement de couronne et **en ce que** le dispositif de maintien (48) présente une surface latérale (74) sur les poussoirs de positionnement de couronne individuels qui peut être déplacée contre la limite de rainure (34) de manière à ce que les conducteurs puissent être positionnés entre la surface latérale (74) et la limite de rainure (34).

2. Dispositif d'agencement de couronne (10) selon la revendication 1,
**caractérisé en ce que**
la limite de rainure (34) est formée sur les nervures et/ou sur une zone annulaire du réceptacle collectif (12).

3. Dispositif d'agencement de couronne (10) selon l'une quelconque des revendications précédentes,
**caractérisé en ce que**
le dispositif de support (46) comprend des butées pour les conducteurs qui sont formées sur une face frontale (70) des poussoirs de positionnement de couronne individuels, face frontale qui s'étend transversalement à l'axe.

4. Dispositif d'agencement de couronne (10) selon l'une quelconque des revendications précédentes,
**caractérisé en ce que**
les ouvertures (40) des rainures (24) sont formées sur un côté radial intérieur et **en ce qu'**un dispositif de mouvement de poussoir de positionnement de couronne pour déplacer radialement et/ou axialement les poussoirs de positionnement de couronne peut être disposé radialement à l'intérieur du réceptacle collectif (12).

5. Dispositif d'agencement de couronne (10) selon l'une quelconque des revendications précédentes,
**caractérisé en ce que**
la position de stockage (32) est une position d'arrêt dans laquelle les conducteurs de préférence en forme de U s'appuient avec leurs extrémités en forme de U contre le réceptacle collectif (12) et peuvent ainsi être positionnés.

6. Dispositif d'agencement de couronne (10) selon l'une quelconque des revendications précédentes,
**caractérisé par**
un dispositif de préhension (28) pour saisir et enficher les conducteurs afin de former une couronne (14a, 14b, 14c), et un dispositif de commande (30) pour commander le dispositif de positionnement de couronne (26) et le dispositif de préhension (28).

7. Dispositif d'agencement de couronne (10) selon la revendication 6,
**caractérisé en ce que**
le dispositif de commande (30) est configuré pour commander le dispositif de préhension (28) et le dispositif de positionnement d'anneaux (26) afin de:
enficher individuellement des conducteurs électriques individuels dans les rainures (24) du réceptacle collectif (12) à la position d'enfichage axiale (16) où les conducteurs dépassent davantage axialement du réceptacle collectif (12), pour former une première couronne (14a),
déplacer axialement la première couronne (14a) de la position d'enfichage axiale (16) plus loin dans le réceptacle collectif (12) dans la position de stockage (32),
enficher individuellement des conducteurs électriques individuels dans les rainures (24) du réceptacle collectif (12) à la position d'enfichage axiale (16) pour former une deuxième couronne (14b) tandis que la première couronne (14a) est maintenue dans la position de stockage, et
déplacer axialement la deuxième couronne (14b) dans la position de stockage (32).

8. Procédé d'agencement pour former un agencement de couronne (82) à partir d'une pluralité de couronnes (14a, 14b, 14c) de conducteurs électriques de préférence en forme de U disposées concentriquement afin de former un enroulement de bobine d'un composant d'une machine électrique, le procédé comprenant les étapes consistant à:
a) enficher individuellement des conducteurs individuels dans des rainures (24) d'un réceptacle collectif (12) qui sont disposées de manière annulaire autour d'un axe et sont délimitées par des nervures radiales (38), dans une position d'enfichage axiale (16) dans laquelle les conducteurs dépassent axialement davantage du réceptacle collectif (12) pour former une première couronne (14a),
b) déplacer axialement la première couronne (14a) depuis la position d'enfichage axial (16) plus loin dans le réceptacle collectif (12) jusqu'à une position de stockage (32),
c) enficher individuellement des conducteurs électriques individuels dans les rainures (24) du réceptacle collectif (12) à la position d'enfichage axial (16) pour former une deuxième couronne (14b) tandis que la première couronne (14a) est maintenue dans la position de stockage (32), et
d) déplacer axialement la deuxième couronne (14b) dans la position de stockage (32).

9. Procédé d'agencement de couronne selon la revendication 8,
**caractérisé par**
e) l'enfichage individuel de conducteurs individuels dans les rainures (24) du réceptacle collectif (12) à la position d'enfichage pour former une troisième couronne (14c) tandis que les premier et deuxième couronnes (14a, 14b, 14c) sont maintenues dans la position de stockage (32) et
f) le déplacement axial de la troisième couronne (14c) dans la position de stockage (32).

10. Procédé d'agencement de couronne selon l'une quelconque des revendications 8 ou 9,
**caractérisé en ce que**
10.1 une couronne extérieure est enfichée en tant que première couronne (14a) et la deuxième couronne (14b) est enfichée plus radialement vers l'intérieur que la première couronne (14a) et/ou
10.2 une couronne intermédiaire est enfichée comme deuxième couronne (14b) et/ou
10.3 une couronne intérieure est enfichée comme troisième couronne (14) et/ou
10.4 les conducteurs sont soutenus pendant l'enfichage par des butées mobiles de manière à rester dans la position d'enfichage pendant l'enfichage et/ou
10.5 le déplacement axial s'effectue par chute et/ou
10.6 le maintien d'au moins l'une des couronnes précédemment enfichées (14a, 14b, 14c) dans la position de stockage (32) s'effectue par serrage des conducteurs entre un poussoir d'agencement de couronne et une zone de couronne du réceptacle collectif (12) et/ou
10.7 le déplacement axial s'effectue par gravité grâce à l'éloignement d'un dispositif de support (46) et/ou
10.8 le déplacement axial s'effectue par un mouvement relatif entre le réceptacle collectif (12) et un dispositif de positionnement de couronne (26) et/ou
10.9 le déplacement axial s'effectue par un mouvement relatif entre une partie supérieure et une partie inférieure du réceptacle collectif (12) ou entre une partie supérieure du réceptacle collectif et un dispositif de positionnement de couronne (26).

11. Procédé d'agencement de couronne selon l'une quelconque des revendications 8 à 10,
**caractérisé en ce que**
le déplacement axial de la couronne respective s'effectue depuis la position d'enfichage vers une position d'arrêt plus profonde servant de position de stockage (32) dans laquelle les extrémités en U des conducteurs reposent sur des nervures du réceptacle collectif (12) délimitant les rainures (24) dans le sens circonférentiel.

12. Procédé d'agencement de couronne selon l'une quelconque des revendications 8 à 11,
**caractérisé en ce que**
le procédé d'agencement de couronne est mis en œuvre à l'aide d'un dispositif d'agencement de couronne (10) selon l'une quelconque des revendications 1 à 7.

13. Procédé d'agencement de couronne selon l'une quelconque des revendications 8 à 12,
**caractérisé par**
le soulèvement de l'agencement de couronne (82) formé à partir d'au moins les première et deuxième couronnes (14a, 14b) de la position de stockage (32) dans une position surélevée pour le transfert vers un dispositif d'assemblage séparé afin d'insérer l'agencement de couronne (82) dans le composant.

14. Produit logiciel comprenant des instructions de commande qui, lorsqu'elles sont chargées dans un contrôleur d'un dispositif d'agencement de couronne (10) selon l'une quelconque des revendications 1 à 7, amènent le dispositif d'agencement de couronne (10) à exécuter le procédé d'agencement de couronne selon l'une quelconque des revendications 8 à 13.
